(19) Europäisches Patentamt / European Patent Office / Office européen des brevets

(11) **EP 4 455 174 A1**

(12) **EUROPEAN PATENT APPLICATION**
published in accordance with Art. 153(4) EPC

(43) Date of publication:
**30.10.2024 Bulletin 2024/44**

(21) Application number: **22911283.4**

(22) Date of filing: **21.12.2022**

(51) International Patent Classification (IPC):
***C08F 222/40*** *(2006.01)* ***C08F 2/18*** *(2006.01)*
***C08F 2/20*** *(2006.01)* ***C08F 22/40*** *(2006.01)*
***C08F 210/00*** *(2006.01)* ***C08F 212/06*** *(2006.01)*
***C08F 218/04*** *(2006.01)* ***C08F 220/18*** *(2006.01)*
***C08L 33/24*** *(2006.01)* ***C08L 35/00*** *(2006.01)*

(52) Cooperative Patent Classification (CPC):
**C08F 2/18; C08F 2/20; C08F 22/40; C08F 210/00; C08F 212/06; C08F 218/04; C08F 220/18; C08F 222/40; C08L 33/24; C08L 35/00**

(86) International application number:
**PCT/JP2022/047128**

(87) International publication number:
**WO 2023/120581 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.12.2021 JP 2021208567**
**15.02.2022 JP 2022021613**
**28.09.2022 JP 2022155429**
**19.12.2022 JP 2022202401**
**19.12.2022 JP 2022202402**

(71) Applicants:
- **Tosoh Corporation**
  **Yamaguchi 746-8501 (JP)**
- **Kai Photonics Co., Ltd.**
  **Tokyo 105-0004 (JP)**

(72) Inventors:
- **YAMADA, Satoru**
  **Yokkaichi-shi, Mie 510-8540 (JP)**
- **WATANABE, Misaki**
  **Yokkaichi-shi, Mie 510-8540 (JP)**
- **KATAGIRI, Fumiaki**
  **Yokkaichi-shi, Mie 510-8540 (JP)**
- **KITAGAWA, Takahiro**
  **Yokkaichi-shi, Mie 510-8540 (JP)**
- **SAKASHITA, Ryuichi**
  **Yokkaichi-shi, Mie 510-8540 (JP)**
- **KOIKE, Yasuhiro**
  **Yokohama-shi, Kanagawa 225-0012 (JP)**

(74) Representative: **Novagraaf International SA**
**Chemin de l'Echo 3**
**1213 Onex, Geneva (CH)**

# (54) METHOD FOR PRODUCING POLYMER, AND RESIN COMPOSITION

(57) It is an object to provide a method for efficiently producing an N-alkylmaleimide-based polymer that has an excellent optical characteristic, excellent heat resistance, and excellent mechanical strength. A method for producing an N-alkylmaleimide-based polymer in accordance with an aspect of the present invention includes using an oil-soluble radical polymerization initiator to carry out suspension polymerization, in an aqueous medium in the presence of at least one dispersant selected from the group consisting of a nonionic compound having no hydrogen bonded to oxygen or nitrogen, a polyacrylate salt, and a polyalkylene glycol, with respect to a monomer mixture consisting of 20% by weight to 100% by weight of N-alkylmaleimide and 0% by weight to 80% by weight of other copolymerizable monomers, the N-alkylmaleimide being represented by the following general formula (1):

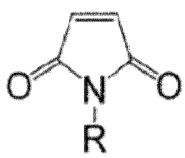

(1)

where R represents a C1-C12 linear alkyl group, a C3-C12 branched alkyl group, or a C3-C6 cyclic alkyl group.

EP 4 455 174 A1

## Description

Technical Field

The present invention relates to a method for producing an N-alkylmaleimide-based polymer and a resin composition. More specifically, the present invention relates to a method for efficiently producing an N-alkylmaleimide-based polymer that has an excellent optical characteristic, excellent heat resistance, and excellent mechanical strength, and to a resin composition containing an N-alkylmaleimide-based polymer.

Background Art

A homopolymer or copolymer obtained from N-alkylmaleimide (N-alkylmaleimide-based polymer) is known to (i) exhibit higher heat resistance than a common thermoplastic vinyl polymer and (ii) be a resin having excellent transparency. Thus, an N-alkylmaleimide-based polymer is a promising material as a transparent resin that can be used for various applications in an optical field (for example, see non-Patent Literature 1).

An N-alkylmaleimide-based polymer containing an alternating copolymer containing N-alkylmaleimide and a vinyl aromatic hydrocarbon such as styrene has been reported to make it possible to achieve a polymer material that has a simple composition, that has low birefringence, and that can maintain its low birefringence under a wide range of environmental temperatures (for example, see Patent Literature 1).

An N-alkylmaleimide-based polymer can be produced by radical polymerization. Alternatively, the N-alkylmaleimide-based polymer can be produced by any of methods conventionally known in the art, such as bulk polymerization, suspension polymerization, solution polymerization, and emulsion polymerization. However, bulk polymerization has a problem of requiring a special production facility because bulk polymerization makes it difficult not only to remove heat but also to remove unreacted monomers. Emulsion polymerization has a problem of making it difficult to remove an emulsifier and impairing transparency of a polymer. Solution polymerization has a problem such that (i) a resulting polymer has a relatively low molecular weight and (ii) the polymer has insufficient mechanical strength. In contrast, suspension polymerization is an industrially preferable production method given that suspension polymerization makes it easy to control a temperature of a polymerization system, makes it possible to obtain a polymer having a high molecular weight, and makes it relatively easy to remove monomers after polymerization. However, suspension polymerization also has a problem of making it difficult to remove a dispersant and impairing transparency of a polymer.

In response to this, suspension polymerization in which a water-soluble cellulose is used as a dispersant has been proposed as a method for producing an N-alkylmaleimide-based polymer that has excellent transparency (for example, see Patent Literatures 2 and 3). As an example of suspension polymerization, it is indicated that, in polymerization of methacrylic acids, which are water-soluble monomers, use of an aqueous medium in which a salt is dissolved makes the methacrylic acids insoluble in the aqueous medium and results in obtainment of a granular polymer (for example, see Non-Patent Literature 2).

Citation List

[Patent Literature]

[Patent Literature 1]
Japanese Patent Application Publication Tokukai No. 2020-126229
[Patent Literature 2]
Japanese Patent Application Publication Tokukai No. 2009-102495
[Patent Literature 3]
Japanese Patent Application Publication Tokukai No. 2009-215346


[Non-patent Literature]

[Non-patent Literature 1]
"Future materials" written by OTSU Takayuki, vol. 3, No. 1, pages 74 to 79
[Non-patent Literature 2]
Ashida, Polymer, 7(5), 298-302 (1958)

## Summary of Invention

### Technical Problem

However, even suspension polymerization in which a water-soluble cellulose is used as a dispersant has a problem such that a yield of a polymer is lost in a case where water-soluble monomers are used. A yield still not cannot be said to be sufficient in suspension polymerization which is disclosed in Patent Literature 2 and in which a specific oleaginous medium is added, and further improvement is desired. Further, no study as to a yield has been made in suspension polymerization which is disclosed in Non-Patent Literature 2 and in which an aqueous medium in which a salt is dissolved is used.

The present invention has been made in view of the problems above, and an object thereof is to provide (i) a method for efficiently producing an N-alkylmaleimide-based polymer that has an excellent optical characteristic, excellent heat resistance, and excellent mechanical strength, and (ii) a technique related to the method.

### Solution to Problem

In order to attain the object, the inventors of the present invention carried out diligent studies, and, as a result, arrived at the present invention by finding a method for producing an N-alkylmaleimide-based polymer by suspension polymerization in which a specific dispersant is used.

That is, an aspect of the present invention relates to a method for producing an N-alkylmaleimide-based polymer, including using an oil-soluble radical polymerization initiator to carry out suspension polymerization, in an aqueous medium in the presence of at least one dispersant selected from the group consisting of a nonionic compound having no hydrogen bonded to oxygen or nitrogen, a polyacrylate salt, and a polyalkylene glycol, with respect to a monomer mixture consisting of 20% by weight to 100% by weight of N-alkylmaleimide represented by the following general formula (1) and 0% by weight to 80% by weight of other copolymerizable monomers:

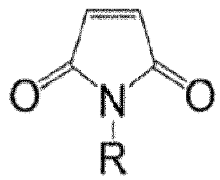

(1)

where R represents a linear alkyl group having 1 to 12 carbon atoms, a branched alkyl group having 3 to 12 carbon atoms, or a cyclic alkyl group having 3 to 6 carbon atoms.

An aspect of the present invention relates to a resin composition containing: not more than 2 parts by weight of at least one dispersant selected from the group consisting of a nonionic compound having no hydrogen bonded to oxygen or nitrogen, a polyacrylate salt, and a polyalkylene glycol; and 100 parts by weight of an N-alkylmaleimide-based polymer consisting of 20% by weight to 100% by weight of N-alkylmaleimide residues represented by the following general formula (1A) and 0% by weight to 80% by weight of other copolymerizable monomer residues:

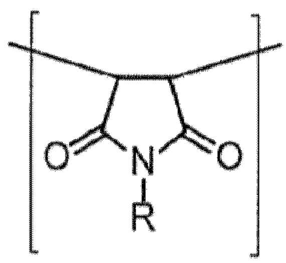

(1A)

where R represents a linear alkyl group having 1 to 12 carbon atoms, a branched alkyl group having 3 to 12 carbon atoms, or a cyclic alkyl group having 3 to 6 carbon atoms.

### Advantageous Effects of Invention

A production method in accordance with an aspect of the present invention makes it possible to efficiently produce an N-alkylmaleimide-based polymer that has an excellent optical characteristic, excellent heat resistance, and

excellent mechanical strength.

Description of Embodiments

The following description will discuss aspects of the present invention in detail. A numerical range indicated herein using "to" represents a range including numerical values followed by and following "to" as a minimum value and a maximum value, respectively.

<Method for producing N-alkylmaleimide-based polymer>

A method for producing an N-alkylmaleimide-based polymer in accordance with an aspect of the present invention includes using an oil-soluble radical polymerization initiator to carry out suspension polymerization, in an aqueous medium in the presence of at least one dispersant selected from the group consisting of a nonionic compound having no hydrogen bonded to oxygen or nitrogen, a polyacrylate salt, and a polyalkylene glycol, with respect to a monomer mixture consisting of 20% by weight to 100% by weight of N-alkylmaleimide represented by the following general formula (1) and 0% by weight to 80% by weight of other copolymerizable monomers:

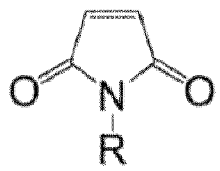

(1)

where R represents a linear alkyl group having 1 to 12 carbon atoms, a branched alkyl group having 3 to 12 carbon atoms, or a cyclic alkyl group having 3 to 6 carbon atoms.

A production method in accordance with the present aspect makes it possible to efficiently produce an N-alkylmaleimide-based polymer that has an excellent optical characteristic, excellent heat resistance, and excellent mechanical strength. Specifically, a film formed with use of a polymer obtained by the production method in accordance with the present aspect has a more excellent mechanical strength and more excellent transparency as compared with a film formed with use of a polymer obtained by suspension polymerization in which a conventional dispersant is used. The production method in accordance with the present aspect is configured such that suspension polymerization, which is simpler in operation than bulk polymerization, is carried out. Note, however, that the film formed with use of the polymer obtained by the production method in accordance with the present aspect has excellent optical characteristics (transparency and low birefringence), excellent heat resistance, and excellent mechanical strength as in the case of a film formed with use of a polymer obtained by bulk polymerization. Thus, as compared with bulk polymerization, the production method in accordance with the present aspect makes it possible to more efficiently produce an N-alkylmaleimide-based polymer that has an excellent optical characteristic, excellent heat resistance, and excellent mechanical strength.

Examples of the linear alkyl group having 1 to 12 carbon atoms include a methyl group, an ethyl group, a propyl group, a butyl group, a pentyl group, a hexyl group, an octyl group, a decyl group, and a dodecyl group. Examples of the branched alkyl group having 3 to 12 carbon atoms include an isopropyl group, an isobutyl group, a sec-butyl group, and a tert-butyl group. Examples of the cyclic alkyl group having 3 to 6 carbon atoms include a cyclopropyl group, a cyclobutyl group, and a cyclohexyl group. Among these, R is preferably a methyl group, an ethyl group, a propyl group, an isopropyl group, a butyl group, an isobutyl group, a sec-butyl group, a tert-butyl group, a hexyl group, a cyclohexyl group, or an octyl group. A methyl group, an ethyl group, an isopropyl group, a tert-butyl group, and a cyclohexyl group are preferable because these groups allow a resulting N-alkylmaleimide-based polymer to have more excellent heat resistance. Further, R in the general formula (1) is preferably any of an ethyl group, a tert-butyl group, and a cyclohexyl group because such a group allows N-alkylmaleimide to have high safety as a compound, and thus makes it possible to reduce equipment safety measures and to achieve efficient and economical production. The N-alkylmaleimide represented by the general formula (1) may be used alone, or in combination.

Specific examples of the N-alkylmaleimide represented by the general formula (1) include N-methylmaleimide, N-ethylmaleimide, N-propylmaleimide, N-isopropylmaleimide, N-butylmaleimide, N-isobutylmaleimide, N-sec-butylmaleimide, N-tert-butylmaleimide, N-pentylmaleimide, N-hexylmaleimide, N-octylmaleimide, N-decylmaleimide, N-dodecylmaleimide, N-cyclopropylmaleimide, N-cyclobutylmaleimide, and N-cyclohexylmaleimide. Among these, N-methylmaleimide, N-ethylmaleimide, N-propylmaleimide, N-isopropylmaleimide, N-butylmaleimide, N-isobutylmaleimide, N-sec-butylmaleimide, N-tert-butylmaleimide, N-hexylmaleimide, N-cyclohexylmaleimide, and N-octylmaleimide are preferable as the N-alkylmaleimide. N-methylmaleimide, N-ethylmaleimide, N-isopropylmaleimide, N-tert-butylmaleimide, and N-cyclohexylmaleimide are preferable because a resulting N-alkylmaleimide-based polymer has more excellent heat resistance. Further, N-ethylmaleimide, N-tert-butylmaleimide, and N-cyclohexylmaleimide are more preferable because such a maleimide allows N-alkylmaleimide to have high safety as a compound, and thus makes it possible to reduce equipment safety measures and to achieve efficient and economical production.

The other copolymerizable monomers in accordance with an aspect of the present invention are not limited provided that the other copolymerizable monomers are copolymerize with the N-alkylmaleimide. Examples of the other copolymerizable monomers include vinyl aromatic hydrocarbons such as styrene and $\alpha$-methylstyrene; olefins such as ethylene, propylene, 1-butene, and isobutene; acrylic acid alkyl esters such as methyl acrylate, ethyl acrylate, and butyl acrylate; methacrylic acid alkyl esters such as methyl methacrylate, ethyl methacrylate, and butyl methacrylate; and carboxylic acid vinyl esters such as vinyl acetate, vinyl propionate, and vinyl pivalate. Among these, vinyl aromatic hydrocarbons such as styrene and $\alpha$-methylstyrene; acrylic acid alkyl esters such as methyl acrylate, ethyl acrylate, and butyl acrylate; and methacrylic acid alkyl esters such as methyl methacrylate, ethyl methacrylate, and butyl methacrylate are preferable, and vinyl aromatic hydrocarbons such as styrene and $\alpha$-methylstyrene; and methacrylic acid alkyl esters such as methyl methacrylate, ethyl methacrylate, and butyl methacrylate are particularly preferable. This is because such copolymerizable monomers make it possible to achieve an N-alkylmaleimide-based polymer that has a simple composition, that has low birefringence, and that can maintain its low birefringence under a wide range of environmental temperatures. The other copolymerizable monomers may be used alone, or in combination.

Mixing ratios in the monomer mixture consisting of the N-alkylmaleimide represented by the general formula (1) and the other copolymerizable monomers in accordance with an aspect of the present invention are such that the N-alkylmaleimide has a mixing ratio of 20% by weight to 100% by weight, and the other copolymerizable monomers have a mixing ratio of 0% by weight to 80% by weight. In particular, it is preferable that the N-alkylmaleimide have a mixing ratio of 35% by weight to 100% by weight and that the other copolymerizable monomers have a mixing ratio of 0% by weight to 65% by weight of copolymerizable monomers, and it is more preferable that the N-alkylmaleimide have a mixing ratio of 50% by weight to 100% by weight and that the other copolymerizable monomers have a mixing ratio of 0% by weight to 50% by weight. This is because such mixing ratios make it possible to obtain an N-alkylmaleimide-based polymer that is excellent particularly in heat resistance and optical characteristic. Further, it is particularly preferable that the N-alkylmaleimide have a mixing ratio of 55% by weight to 80% by weight and that the other copolymerizable monomers have a mixing ratio of 20% by weight to 45% by weight. This is because such mixing ratios make it possible to achieve a good photoelastic coefficient and a good intrinsic birefringence.

A dispersant in accordance with an aspect of the present invention is a nonionic compound having no hydrogen bonded to oxygen or nitrogen. That is, the nonionic compound has no hydrogen bonded to oxygen and no hydrogen bonded to nitrogen. The nonionic compound having no hydrogen bonded to oxygen or nitrogen has a weak interaction with an N-alkylmaleimide-based polymer and can be efficiently removed by cleaning after polymerization. Since the nonionic compound can be efficiently removed by cleaning after polymerization, suspension polymerization in which the nonionic compound is used results in obtainment of an N-alkylmaleimide-based polymer that has an excellent optical characteristic and excellent mechanical strength. It has not been previously reported that use of the nonionic compound having no hydrogen bonded to oxygen or nitrogen makes it possible to improve transparency and mechanical strength.

Examples of the nonionic compound having no hydrogen bonded to oxygen or nitrogen in accordance with an aspect of the present invention include polyoxyethylene alkyl ether, poly(N-vinylamide), and a polyoxypropylene/polyoxyethylene block copolymer.

Examples of the polyoxyethylene alkyl ether include polyoxyethylene lauryl ether, polyoxyethylene cetyl ether, polyoxyethylene stearyl ether, polyoxyethylene oleyl ether, polyoxyethylene myristyl ether, and polyoxyethylene octyldodecyl ether.

Examples of the poly(N-vinylamide) include poly(N-vinylformamide), poly(N-vinylacetamide), poly(N-vinylisobutylamide), polyvinyl pyrrolidone, and polyvinyl caprolactam. Among these, poly(N-vinylformamide), poly(N-vinylacetamide), and polyvinyl pyrrolidone are preferable given particularly that it is possible to obtain a resulting N-alkylmaleimide-based polymer as granular particles and that it is possible to more efficiently remove poly(N-vinylamide) after polymerization and thus to obtain an N-alkylmaleimide-based polymer which has an excellent optical characteristic and excellent mechanical strength.

In a case where polyvinyl pyrrolidone is used as the nonionic compound having no hydrogen bonded to oxygen or nitrogen, a viscosity characteristic value (K value) calculated by Fikentscher's equation represented by formula (2) below is preferably 10 to 130. In particular, the K value is more preferably 20 to 125, and particularly preferably 30 to 120 given particularly that it is possible to obtain a resulting N-alkylmaleimide-based polymer as granular particles and that it is possible to more efficiently remove water-soluble poly(N-vinylamide) after polymerization and thus to obtain an N-alkylmaleimide-based polymer which has an excellent optical characteristic and excellent mechanical strength.

$$K = (1.5 \times \log\eta_{rel}-1)/(0.15+0.003 \times c) + \{300 \times c \times \log\eta_{rel} +(c + 1.5 \times c \times \log\eta_{rel})^2\}^{1/2}/(015 \times c + 0.003 \times c^2) \quad (2)$$

$\eta_{rel}$: Relative viscosity of aqueous polyvinyl pyrrolidone solution to water
c: Polyvinyl pyrrolidone concentration (%) in aqueous polyvinyl pyrrolidone solution

The dispersant in accordance with an aspect of the present invention is a polyacrylate salt. The polyacrylate salt has, in a polyacrylic acid main chain excluding a cationic part, no hydrogen bonded to oxygen and no hydrogen bonded to nitrogen. The polyacrylate salt has a weak interaction with an N-alkylmaleimide-based polymer and can be efficiently removed by cleaning after polymerization. Since the polyacrylate salt can be efficiently removed by cleaning after polymerization, suspension polymerization in which the polyacrylate salt is used results in obtainment of an N-alkylmaleimide-based polymer that has an excellent optical characteristic and excellent mechanical strength. It has not been previously reported that use of the polyacrylate salt makes it possible to improve transparency and mechanical strength.

Examples of a polyacrylate salt in accordance with an aspect of the present invention include sodium polyacrylate, potassium polyacrylate, calcium polyacrylate, magnesium polyacrylate, and ammonium polyacrylate. Among these, sodium polyacrylate is preferable given particularly that it is possible to obtain a resulting N-alkylmaleimide-based polymer as granular particles and that it is possible to more efficiently remove a polyacrylate salt after polymerization and thus to obtain an N-alkylmaleimide-based polymer which has an excellent optical characteristic and excellent mechanical strength.

In a case where sodium polyacrylate is used as the polyacrylate salt, the sodium polyacrylate has a weight average molecular weight (Mw) which is not particularly limited but is preferably 100,000 to 5,000,000, more preferably 500,000 to 3,000,000, and particularly preferably 1,000,000 to 3,000,000 given that it is possible to obtain a resulting N-alkylmaleimide-based polymer as granular particles and that it is possible to efficiently remove sodium polyacrylate after polymerization and thus to obtain an N-alkylmaleimide-based polymer which has an excellent optical characteristic and excellent mechanical strength.

The dispersant in accordance with an aspect of the present invention is a polyalkylene glycol. The polyalkylene glycol is a polymer of alkylene oxide having 2 to 4 carbon atoms and has hydrogen bonded to oxygen. The polyalkylene glycol has a weak interaction with an N-alkylmaleimide-based polymer and can be efficiently removed by cleaning after polymerization. Since the polyalkylene glycol can be efficiently removed by cleaning after polymerization, suspension polymerization in which the polyalkylene glycol is used results in obtainment of an N-alkylmaleimide-based polymer that has an excellent optical characteristic and excellent mechanical strength. It has not been previously reported that use of the polyalkylene glycol makes it possible to improve transparency and mechanical strength.

Examples of a polyalkylene glycol in accordance with an aspect of the present invention include polyethylene glycol, polypropylene glycol, polybutylene glycol, and polyoxyethylene polyoxypropylene glycol. Among these, polyethylene glycol is preferable given particularly that it is possible to obtain a resulting N-alkylmaleimide-based polymer as granular particles and that it is possible to more efficiently remove a polyalkylene glycol after polymerization and thus to obtain an N-alkylmaleimide-based polymer which has an excellent optical characteristic and excellent mechanical strength.

In a case where polyethylene glycol is used as the polyalkylene glycol, the polyethylene glycol has a viscosity average molecular weight which is not particularly limited but is preferably 20,000 to 10,000,000, more preferably 150,000 to 8,000,000, and particularly preferably 1,000,000 to 5,000,000 given that it is possible to obtain a resulting N-alkylmaleimide-based polymer as granular particles and that it is possible to efficiently remove a polyalkylene glycol after polymerization and thus to obtain an N-alkylmaleimide-based polymer which has an excellent optical characteristic and excellent mechanical strength.

In an aspect of the present invention, the dispersant is at least one selected from the group consisting of a nonionic compound having no hydrogen bonded to oxygen or nitrogen, a polyacrylate salt, and a polyalkylene glycol. The dispersants may be used alone, or in combination.

The at least one dispersant selected from the group consisting of a nonionic compound having no hydrogen bonded to oxygen or nitrogen, a polyacrylate salt, and a polyalkylene glycol in accordance with an aspect of the present invention is added in an amount of preferably 0.01 parts by weight to 25 parts by weight with respect to 100 parts by weight of the monomer mixture. In particular, the dispersant is added in an amount of more preferably 0.01 parts by weight to 20 parts by weight, and particularly preferably 0.01 parts by weight to 15 parts by weight given particularly that it is possible to obtain a resulting N-alkylmaleimide-based polymer as granular particles and that it is possible to efficiently remove a dispersant after polymerization and thus to obtain an N-alkylmaleimide-based polymer which has an excellent optical characteristic and excellent mechanical strength.

Examples of an oil-soluble radical polymerization initiator in accordance with an aspect of the present invention include organic peroxides such as benzoyl peroxide, lauryl peroxide, octanoyl peroxide, acetyl peroxide, di-tert-butyl peroxide, tert-butylcumyl peroxide, dicumylperoxide, tert-butyl peroxyacetate, tert-butyl peroxybenzoate, tert-butylperoxy-2-ethylhexanoate, tert-hexylperoxy-2-ethylhexanoate, 2,5-dimethyl-2,5-di(2-ethylhexanoylperoxy)hexane, 1,1,3,3-tetramethylbutylperoxy-2-ethylhexanoate, tert-butyl peroxypivalate, tert-hexyl peroxypivalate, tert-butyl peroxyneodecanoate, and tert-hexyl peroxyneodecanoate, and azo-based initiators such as 2,2'-azobis(2,4-dimethylvaleronitrile), 2,2'-azobis(2-butylonitrile), 2,2'-azobisisobutyronitrile, dimethyl-2,2'-azobisisobutyrate, and 1,1'-azobis(cyclohexane-1-carbonitrile).

The oil-soluble radical polymerization initiator is used in an amount that can be set as appropriate and is, for example, 0.0001 parts by weight to 2 parts by weight with respect to 100 parts by weight of the monomer mixture. In particular, the oil-soluble radical polymerization initiator is used in an amount of preferably 0.001 parts by weight to 1 part by weight, and more preferably 0.01 parts by weight to 0.5 parts by weight given particularly that a resulting N-alkylmaleimide-based polymer has an excellent optical characteristic and excellent mechanical strength.

An aqueous medium in accordance with an aspect of the present invention may be one that is ordinarily treated as an aqueous medium, and examples thereof include water, industrial water, ion-exchange water, and distilled water. The aqueous medium is used in an amount of, for example, 100 parts by weight to 500 parts by weight with respect to 100 parts by weight of the monomer mixture. In particular, the aqueous medium is used in an amount of preferably 125 parts by weight to 400 parts by weight, and particularly preferably 150 parts by weight to 300 parts by weight given particularly that it is possible to efficiently produce a granular N-alkylmaleimide-based polymer.

In a production method in accordance with an aspect of the present invention, in a case where N-alkylmaleimide is in a solid state, an oleaginous medium may be added during preparation of monomers in order to efficiently produce an N-alkylmaleimide-based polymer by preparing the N-alkylmaleimide in a solution state. The oleaginous medium can be at least one selected from the group consisting of an aromatic hydrocarbon, an ether, an ester, a ketone, and a halogen compound.

Note here that examples of the aromatic hydrocarbon include toluene and xylene. Examples of the ether include a diethyl ether and a diisopropyl ether. Examples of the ester include ethyl acetate, butyl acetate, and dimethyl carbonate. Examples of the ketone include methylethylketone and methylisobutylketone. Examples of the halogen compound include chloroform, methylene chloride, and 1,2-dichloroethane. Among these, in order to efficiently produce an N-alkylmaleimide-based polymer that has excellent mechanical strength, aromatic hydrocarbons, ethers, esters, and ketones are preferable, and toluene and xylene are particularly preferable.

In a case where the oleaginous medium is added, the oleaginous medium may be used in any amount provided that the production method in accordance with an aspect of the present invention can be carried out. In particular, the oleaginous medium is used in an amount of preferably 0.01 parts by weight to 70 parts by weight, more preferably 0.1 parts by weight to 50 parts by weight, and particularly preferably 5 parts by weight to 25 parts by weight with respect to 100 parts by weight of the monomer mixture, particularly in order to efficiently produce an N-alkylmaleimide-based polymer that has excellent mechanical strength.

A polymerization temperature in accordance with an aspect of the production method of the present invention can be set as appropriate in accordance with a decomposition temperature of the oil-soluble radical polymerization initiator. In particular, the polymerization temperature is in a range of preferably 40°C to 150°C, more preferably 50°C to 90°C, and particularly preferably 60°C to 80°C, particularly in order to efficiently produce an N-alkylmaleimide-based polymer that has an excellent optical characteristic and excellent mechanical strength.

In an aspect of the present invention, the aqueous medium preferably contains a salt. The aqueous medium that contains a salt makes it possible to increase a yield of a polymer.

A salt in accordance with an aspect of the present invention is a salt that is dissolved in an aqueous medium at a polymerization temperature. In suspension polymerization in which an oil-soluble radical polymerization initiator is used to polymerize, in the presence of at least one dispersant selected from the group consisting of a nonionic compound having no hydrogen bonded to oxygen or nitrogen, a polyacrylate salt, and a polyalkylene glycol, a monomer mixture consisting of N-alkylmaleimide and other copolymerizable monomers, use of an aqueous medium in which a salt is dissolved makes it possible to make a water-soluble monomer mixture insoluble in the aqueous medium without precipitation of the dispersant. This makes it possible to increase a monomer mixture concentration in an oil phase. This results in an increase in yield. It has not been previously reported that use of an aqueous medium in which a salt is dissolved makes it possible to improve a yield.

Examples of a salt in accordance with an aspect of the present invention include alkali metal salts of inorganic acids, alkaline earth metal salts of inorganic acids, ammonium salts of inorganic acids, alkali metal salts of organic acids, alkaline earth metal salts of organic acids, and ammonium salts of organic acids. The salt is preferably an alkali metal salt of an inorganic acid, an alkaline earth metal salt of an inorganic acid, an alkali metal salt of an organic acid, or an alkaline earth metal salt of an organic acid, and particularly preferably an alkali metal salt of an inorganic acid. Use of such a preferable salt makes it difficult for the dispersant that is dissolved in the aqueous medium at the polymerization temperature to be precipitated. This makes it possible to produce an N-alkylmaleimide-based polymer as granular particles that have good handleability. The salts may be used alone, or in combination.

Among these salts, an acetate is preferably used as a salt of an organic acid (e.g., an alkali metal salt or an alkaline earth metal salt), and a chloride salt, a bromide salt, a nitrate, a sulfate, a chlorate, an iodide, or a thiocyanate is preferably used as a salt of an inorganic acid (e.g., an alkali metal salt or an alkaline earth metal salt). Use of such a

preferable salt makes it difficult for the dispersant that is dissolved in the aqueous medium at the polymerization temperature to be precipitated. This makes it possible to produce an N-alkylmaleimide-based polymer as granular particles that have good handleability.

Examples of the alkali metal salts of inorganic acids include: alkali metal sulfates such as lithium sulfate, sodium sulfate, potassium sulfate, rubidium sulfate, and cesium sulfate; alkali metal chloride salts such as lithium chloride, sodium chloride, potassium chloride, rubidium chloride, and cesium chloride; alkali metal bromide salts such as lithium bromide, sodium bromide, potassium bromide, rubidium bromide, and cesium bromide; alkali metal nitrates such as lithium nitrate, sodium nitrate, potassium nitrate, rubidium nitrate, and cesium nitrate; alkali metal chlorates such as lithium chlorate, sodium chlorate, potassium chlorate, rubidium chlorate, and cesium chlorate; alkali metal iodides such as lithium iodide, sodium iodide, potassium iodide, rubidium iodide, and cesium iodide; and alkali metal thiocyanates such as lithium thiocyanate, sodium thiocyanate, potassium thiocyanate, rubidium thiocyanate, and cesium thiocyanate. As an alkali metal salt of an inorganic acid which alkali metal salt makes it more difficult for a dispersant to be precipitated, sodium chloride, potassium chloride, rubidium chloride, cesium chloride, sodium bromide, potassium bromide, rubidium bromide, cesium bromide, sodium nitrate, potassium nitrate, rubidium nitrate, cesium nitrate, sodium sulfate, potassium sulfate, rubidium sulfate, cesium sulfate, sodium chlorate, potassium chlorate, rubidium chlorate, cesium chlorate, sodium iodide, potassium iodide, rubidium iodide, cesium iodide, sodium thiocyanate, potassium thiocyanate, rubidium thiocyanate, or cesium thiocyanate is preferably used, and sodium chloride is particularly preferably used.

Examples of the alkaline earth metal salts of inorganic acids include: alkaline earth metal sulfates such as magnesium sulfate, calcium sulfate, strontium sulfate, and barium sulfate; alkaline earth metal chloride salts such as magnesium chloride, calcium chloride, strontium chloride, and barium chloride; alkaline earth metal bromide salts such as magnesium bromide, calcium bromide, strontium bromide, and barium bromide; alkaline earth metal nitrates such as magnesium nitrate, calcium nitrate, strontium nitrate, and barium nitrate; alkaline earth metal chlorates such as magnesium chlorate, calcium chlorate, strontium chlorate, and barium chlorate; alkaline earth metal iodides such as magnesium iodide, calcium iodide, strontium iodide, and barium iodide; and alkaline earth metal thiocyanates such as magnesium thiocyanate, calcium thiocyanate, strontium thiocyanate, and barium thiocyanate. As an alkaline earth metal salt of an inorganic acid which alkaline earth metal salt makes it more difficult for a dispersant to be precipitated, calcium chloride, strontium chloride, barium chloride, calcium bromide, strontium bromide, barium bromide, calcium nitrate, strontium nitrate, barium nitrate, calcium sulfate, strontium sulfate, barium sulfate, calcium chlorate, strontium chlorate, barium chlorate, calcium iodide, strontium iodide, barium iodide, calcium thiocyanate, strontium thiocyanate, or barium thiocyanate is preferably used.

Examples of the alkali metal salts of organic acids include: alkali metal citrates such as lithium citrate, sodium citrate, potassium citrate, rubidium citrate, and cesium citrate; alkali metal tartrates such as lithium tartrate, sodium tartrate, potassium tartrate, rubidium tartrate, and cesium tartrate; and alkali metal acetates such as lithium acetate, sodium acetate, potassium acetate, rubidium acetate, and cesium acetate. As an alkali metal salt of an organic acid of an inorganic acid which alkali metal salt makes it more difficult for a dispersant to be precipitated, sodium acetate, potassium acetate, rubidium acetate, or cesium acetate is preferably used.

Examples of the alkaline earth metal salts of organic acids include: alkaline earth metal citrates such as magnesium citrate, calcium citrate, strontium citrate, and barium citrate; alkaline earth metal tartrates such as magnesium tartrate, calcium tartrate, strontium tartrate, and barium tartrate; and alkaline earth metal acetates such as magnesium acetate, calcium acetate, strontium acetate, and barium acetate. As an alkaline earth metal salt of an organic acid which alkaline earth metal salt makes it more difficult for a dispersant to be precipitated, calcium acetate, strontium acetate, or barium acetate is preferably used.

Examples of the ammonium salts of inorganic acids include ammonium sulfate, ammonium chloride, ammonium bromide, ammonium nitrate, ammonium chlorate, ammonium iodide, and ammonium thiocyanate. Examples of the ammonium salts of organic acids include ammonium citrate, ammonium tartrate, and ammonium acetate.

The content of the salt(s) in the aqueous medium may be any content as long as the dispersant dissolved in the aqueous medium does not precipitate at the polymerization temperature and the production method of the present invention can be carried out. In particular, a total content of the salt(s) in the aqueous medium is preferably 1% by weight to 40% by weight, more preferably 1% by weight to 35% by weight, and particularly preferably 1% by weight to 30% by weight with respect to a total weight of the aqueous medium and the salt(s), particularly in order to produce an N-alkylmaleimide-based polymer with a high yield and efficiently remove a salt remaining in the produced N-alkylmaleimide-based polymer. In a case where the aqueous medium contains a plurality of types of salts, a salt content is expressed as a content of all the plurality of types of salts.

In order to efficiently and economically produce, in granular form, an N-alkylmaleimide-based polymer that has an excellent optical characteristic and excellent mechanical strength, the production method in accordance with an aspect of the present invention preferably includes, after the N-alkylmaleimide-based polymer obtained by suspension polymerization is filtered, cleaning the N-alkylmaleimide-based polymer with a solvent for dissolving the dispersant without dissolving the N-alkylmaleimide-based polymer, and cleaning the N-alkylmaleimide-based polymer with a solvent

for dissolving an unreacted monomer without dissolving the N-alkylmaleimide-based polymer.

The solvent for dissolving the dispersant without dissolving the N-alkylmaleimide-based polymer may be a solvent for dissolving not only the dispersant but also the unreacted monomer. Similarly, the solvent for dissolving an unreacted monomer without dissolving the N-alkylmaleimide-based polymer may be a solvent for dissolving not only the unreacted monomer but also the dispersant. That is, examples of the solvent used include a solvent in which the N-alkylmaleimide-based polymer is insoluble and in which (i) only the dispersant is soluble, (ii) only the unreacted monomer is soluble, or (iii) both the dispersant and the unreacted monomer are soluble. The solvent used is not particularly limited provided that the solvent is such a solvent as described above, and examples thereof include water, methanol, ethanol, a methanol/toluene mixed solvent, an ethanol/toluene mixed solvent, a methanol/water mixed solvent, and an ethanol/water mixed solvent. For example, water is soluble in the dispersant and the unreacted N-alkylmaleimide monomer. In contrast, methanol, ethanol, a methanol/toluene mixed solvent, an ethanol/toluene mixed solvent, a methanol/water mixed solvent, and an ethanol/water mixed solvent are soluble in the dispersant, the unreacted N-alkylmaleimide monomer, and the unreacted other copolymerizable monomers.

In the case of a solvent in which the N-alkylmaleimide-based polymer is insoluble and both the dispersant and the unreacted monomer are soluble, a single solvent can be used to simultaneously remove the dispersant and the unreacted monomer. Alternatively, solvents different from each other may be used to separately remove the dispersant and the unreacted monomer. In a case where the dispersant and the unreacted monomer are separately removed, the N-alkylmaleimide-based polymer may be cleaned with the solvent for dissolving the dispersant, and then be cleaned with the solvent for dissolving an unreacted monomer, or the N-alkylmaleimide-based polymer may be cleaned with the solvent for dissolving an unreacted monomer, and then be cleaned with the solvent for dissolving the dispersant. From the viewpoint that, in order to efficiently remove the dispersant, the dispersant is cleaned in a state in which the N-alkylmaleimide-based polymer is swollen with the unreacted monomer, it is preferable that the N-alkylmaleimide-based polymer be cleaned with the solvent for dissolving the dispersant, and then be cleaned with the solvent for dissolving an unreacted monomer.

Further, in an aspect of the present invention, a chain transfer agent such as alkyl mercaptan, or a hindered phenolic or phosphorus-based antioxidant may be used as needed at an initial stage of polymerization, during polymerization, or after polymerization.

An N-alkylmaleimide-based polymer obtained by the production method in accordance with an aspect of the present invention has a weight-average molecular weight ($M_w$) that is not particularly limited but is preferably 200,000 to 2,000,000, more preferably 500,000 to 1,800,000, and particularly preferably 800,000 to 1,500,000 in order to produce an N-alkylmaleimide-based polymer that has an excellent optical characteristic and excellent mechanical strength. Note that the weight-average molecular weight ($M_w$) of the N-alkylmaleimide-based polymer can be controlled by the polymerization temperature.

A proportion of units derived from N-alkylmaleimide, i.e., N-alkylmaleimide residues in the N-alkylmaleimide-based polymer obtained by the production method in accordance with an aspect of the present invention is in a range of 20% by weight to 100% by weight. In particular, the proportion is preferably 35% by weight to 100% by weight, and more preferably 50% by weight to 100% by weight given particularly that it is possible to obtain an N-alkylmaleimide-based polymer which has excellent heat resistance and an excellent optical characteristic.

The N-alkylmaleimide-based polymer obtained by the production method in accordance with an aspect of the present invention has a particle shape that is not particularly limited. Note, however, that, given that efficient removal of the dispersant, the unreacted monomer, or both the dispersant and the unreacted monomer results in obtainment of an N-alkylmaleimide-based polymer which has an excellent optical characteristic and excellent mechanical strength, the N-alkylmaleimide-based polymer is preferably granular and has an average particle diameter which is in a range of preferably 20 μm to 2,000 μm, more preferably 30 μm to 1,000 μm, and particularly preferably 50 μm to 900 μm. The average particle diameter in the present specification is a particle diameter at which a volume-based cumulative particle weight determined by a laser diffraction and scattering method is 50%.

A glass transition point (Tg) of the N-alkylmaleimide-based polymer serves as an indicator of heat resistance. The N-alkylmaleimide-based polymer obtained by an aspect of the production method of the present invention has a glass transition point (Tg) that is not particularly limited but is preferably not lower than 120°C, more preferably not lower than 135°C, and particularly preferably not lower than 150°C given that it is possible to obtain an N-alkylmaleimide-based polymer which has excellent heat resistance.

A tensile stress of the N-alkylmaleimide-based polymer serves an indicator of mechanical strength. The N-alkylmaleimide-based polymer obtained by an aspect of the production method of the present invention has a tensile stress that is not particularly limited but is preferably not less than 30 MPa, more preferably not less than 35 MPa, and particularly preferably not less than 40 MPa given that it is possible to obtain an N-alkylmaleimide-based polymer which has excellent mechanical strength. Note that the tensile stress of the N-alkylmaleimide-based polymer can be controlled by Mw.

A tensile elongation, which is an indicator of mechanical strength of the N-alkylmaleimide-based polymer obtained by the production method in accordance with an aspect of the present invention is not particularly limited but is preferably not less than 1.5%, more preferably not less than 2%, even more preferably not less than 2.5%, and particularly preferably not less than 3% given that it is possible to obtain an N-alkylmaleimide-based polymer which has excellent mechanical strength.

A haze of the N-alkylmaleimide-based polymer is among indicators of optical characteristics. The N-alkylmaleimide-based polymer obtained by an aspect of the production method of the present invention has a haze that is not particularly limited but is preferably less than 3%, more preferably less than 2.5%, and particularly preferably less than 2% given that it is possible to obtain an N-alkylmaleimide-based polymer which has excellent transparency. Note that the haze of the N-alkylmaleimide-based polymer can be controlled by a type of dispersant and/or a dispersant residual amount and a monomer residual amount in the N-alkylmaleimide-based polymer.

A photoelastic constant (C) and intrinsic birefringence ($\Delta n^0$) of the N-alkylmaleimide-based polymer are among the indicators of the optical characteristics. The photoelastic constant (C) and the intrinsic birefringence ($\Delta n^0$) of the N-alkylmaleimide-based polymer obtained by an aspect of the production method of the present invention have respective absolute values that are not particularly limited. However, given that it is possible to obtain a N-alkylmaleimide-based polymer which has low birefringence, it is preferable that C have an absolute value of not more than $50\times 10^{-12}Pa^{-1}$ and that $\Delta n^0$ have an absolute value of not more than $20\times 10^{-3}$, it is more preferable that C have an absolute value of not more than $10\times10^{-12}Pa^{-1}$ and that $\Delta n^0$ have an absolute value of not more than $5\times10^{-3}$, and it is particularly preferable that C have an absolute value of not more than $2\times10^{-12}Pa^{-1}$ and that $\Delta n^0$ have an absolute value of not more than $1\times10^{-3}$. Note that C and $\Delta n^0$ of the N-alkylmaleimide-based polymer are constants which can be controlled by a type of monomer and a proportion of monomer units, i.e., residues, in the N-alkylmaleimide-based polymer.

A temperature constant of the intrinsic birefringence ($d\Delta n^0/dT$) of the N-alkylmaleimide-based polymer is among the indicators of the optical characteristics. The temperature constant of the intrinsic birefringence ($d\Delta n^0/dT$) of the N-alkylmaleimide-based polymer obtained by an aspect of the production method of the present invention is not particularly limited in absolute value. However, the temperature constant of the intrinsic birefringence is preferably not more than $2\times10^{-5}°C^{-1}$, and more preferably not more than $1\times10^{-5}°C^{-1}$ given that it is possible to obtain an N-alkylmaleimide-based polymer which can maintain low birefringence under a wide range of environmental temperatures. Note that $d\Delta n^0/dT$ of the N-alkylmaleimide-based polymer is a constant which can be controlled by a type of monomer and a proportion of monomer units, i.e., residues, in the N-alkylmaleimide-based polymer.

<Resin composition>

A resin composition in accordance with an aspect of the present invention contains: not more than 2 parts by weight of at least one dispersant selected from the group consisting of a nonionic compound having no hydrogen bonded to oxygen or nitrogen, a polyacrylate salt, and a polyalkylene glycol; and 100 parts by weight of an N-alkylmaleimide-based polymer consisting of 20% by weight to 100% by weight of N-alkylmaleimide residues represented by the following general formula (1A) below and 0% by weight to 80% by weight of other copolymerizable monomer residues. The resin composition in accordance with an aspect of the present invention can be produced by a method for producing an N-alkylmaleimide-based polymer in accordance with an aspect of the present invention, the method preferably including cleaning the N-alkylmaleimide-based polymer.

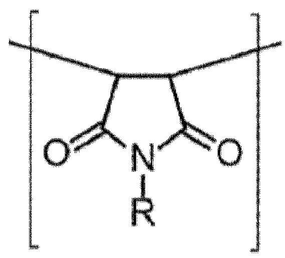

(1A)

where R represents a linear alkyl group having 1 to 12 carbon atoms, a branched alkyl group having 3 to 12 carbon atoms, or a cyclic alkyl group having 3 to 6 carbon atoms.

The resin composition in accordance with an aspect of the present invention can be produced by a method for producing an N-alkylmaleimide-based polymer in accordance with an aspect of the present invention, the method preferably including cleaning the N-alkylmaleimide-based polymer. In other words, the N-alkylmaleimide residues represented by the general formula (1A) are residues derived from the N-alkylmaleimide represented by the general formula (1). Thus, since the description of the N-alkylmaleimide represented by the general formula (1) can be referred to for a technical feature of the N-alkylmaleimide residues represented by the general formula (1A), a detailed description of the

technical feature is omitted. Similarly, in the resin composition in accordance with an aspect of the present invention, other copolymerizable monomers and at least one dispersant selected from the group consisting of a nonionic compound having no hydrogen bonded to oxygen or nitrogen, a polyacrylate salt, and a polyalkylene glycol are also identical to (i) the above-described other copolymerizable monomers and (ii) the above-described at least one dispersant selected from the group consisting of a nonionic compound having no hydrogen bonded to oxygen or nitrogen, a polyacrylate salt, and a polyalkylene glycol, respectively. Thus, since the description of the other copolymerizable monomers and the at least one dispersant in the method for producing an N-alkylmaleimide-based polymer in accordance with an aspect of the present invention can be referred to for technical features of the other copolymerizable monomers and the at least one dispersant in the resin composition in accordance with an aspect of the present invention, a detailed description of the technical features is omitted.

A content of the at least one dispersant selected from the group consisting of a nonionic compound having no hydrogen bonded to oxygen or nitrogen, a polyacrylate salt, and a polyalkylene glycol in the resin composition in accordance with an aspect of the present invention is not more than 2 parts by weight with respect to 100 parts by weight of the N-alkylmaleimide-based polymer. In particular, the content of the at least one dispersant is preferably 0.01 parts by weight to 2 parts by weight, and particularly preferably 0.01 parts by weight to 1.5 parts by weight given particularly that it is possible to obtain a resin composition which has a more excellent optical characteristic and more excellent mechanical strength.

<Use>

The N-alkylmaleimide-based polymer obtained by the production method in accordance with an aspect of the present invention and the resin composition in accordance with an aspect of the present invention not only have an excellent optical characteristic and excellent mechanical strength but also have excellent heat resistance, and thus can be used in, for example, various optical members, optical lenses, optical sheets, and optical films.

Aspects of the present invention can also be expressed as follows:

A production method in accordance with a first aspect of the present invention relates to a method for producinother g an N-alkylmaleimide-based polymer in accordance with an aspect of the present invention includes using an oil-soluble radical polymerization initiator to carry out suspension polymerization, in an aqueous medium in the presence of at least one dispersant selected from the group consisting of a nonionic compound having no hydrogen bonded to oxygen or nitrogen, a polyacrylate salt, and a polyalkylene glycol, with respect to a monomer mixture consisting of 20% by weight to 100% by weight of N-alkylmaleimide represented by the following general formula (1) and 0% by weight to 80% by weight of other copolymerizable monomers:

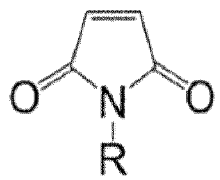

(1)

where R represents a linear alkyl group having 1 to 12 carbon atoms, a branched alkyl group having 3 to 12 carbon atoms, or a cyclic alkyl group having 3 to 6 carbon atoms.

The production method in accordance with a second aspect of the present invention employs, in addition to the configuration of the first aspect above, a configuration such that R is a methyl group, an ethyl group, a propyl group, an isopropyl group, a butyl group, an isobutyl group, a sec-butyl group, a tert-butyl group, a hexyl group, a cyclohexyl group, or an octyl group.

The production method in accordance with a third aspect of the present invention employs, in addition to the configuration of the first or second aspect above, a configuration such that the other copolymerizable monomers are vinyl aromatic hydrocarbons, olefins, acrylic acid alkyl esters, methacrylic acid alkyl esters, or carboxylic acid vinyl esters.

The production method in accordance with a fourth aspect of the present invention employs, in addition to the configuration of any one of the first to third aspects above, a configuration such that the dispersant is at least one selected from the group consisting of polyvinyl pyrrolidone, sodium polyacrylate, and polyethylene glycol.

The production method in accordance with a fifth aspect of the present invention employs, in addition to the configuration of any one of the first to fourth aspects above, a configuration such that the N-alkylmaleimide-based polymer has a weight average molecular weight of 200,000 to 2,000,000.

The production method in accordance with a sixth aspect of the present invention employs, in addition to the configuration of any one of the first to fifth aspects above, a configuration such that the aqueous medium in which suspension polymerization is carried out contains a salt.

The production method in accordance with a seventh aspect of the present invention employs, in addition to the configuration of any one of the first to sixth aspects above, a configuration such that the production method further includes, after the N-alkylmaleimide-based polymer obtained by suspension polymerization is filtered, cleaning the N-alkylmaleimide-based polymer with a solvent for dissolving the dispersant without dissolving the N-alkylmaleimide-based polymer, and cleaning the N-alkylmaleimide-based polymer with a solvent for dissolving an unreacted monomer without dissolving the N-alkylmaleimide-based polymer.

An eighth aspect of the present invention relates to a resin composition containing: not more than 2 parts by weight of at least one dispersant selected from the group consisting of a nonionic compound having no hydrogen bonded to oxygen or nitrogen, a polyacrylate salt, and a polyalkylene glycol; and 100 parts by weight of an N-alkylmaleimide-based polymer consisting of 20% by weight to 100% by weight of N-alkylmaleimide residues represented by the following general formula (1A) and 0% by weight to 80% by weight of other copolymerizable monomer residues:

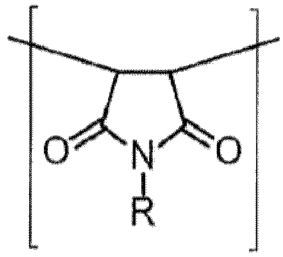

(1A)

where R represents a linear alkyl group having 1 to 12 carbon atoms, a branched alkyl group having 3 to 12 carbon atoms, or a cyclic alkyl group having 3 to 6 carbon atoms.

A ninth aspect of the present invention relates to a method for producing an N-alkylmaleimide-based polymer, including using an oil-soluble radical polymerization initiator to carry out suspension polymerization, in an aqueous medium containing a salt and in the presence of at least one dispersant selected from the group consisting of a nonionic compound having no hydrogen bonded to oxygen or nitrogen, a polyacrylate salt, and a polyalkylene glycol, with respect to a monomer mixture consisting of 20% by weight to 100% by weight of N-alkylmaleimide represented by the following general formula (1) and 0% by weight to 80% by weight of other copolymerizable monomers:

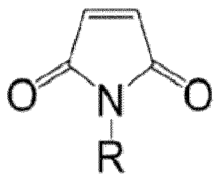

(1)

where R represents a linear alkyl group having 1 to 12 carbon atoms, a branched alkyl group having 3 to 12 carbon atoms, or a cyclic alkyl group having 3 to 6 carbon atoms.

The production method in accordance with a tenth aspect of the present invention employs, in addition to the configuration of the sixth or ninth aspect above, a configuration such that the salt is an acetate, a chloride salt, a bromide salt, a nitrate, a sulfate, a chlorate, an iodide, or a thiocyanate.

Examples

The following description will discuss the present invention in accordance with Examples. Note, however, that the present invention is not limited to these Examples. Note that a reagent used is a commercially available product, unless otherwise noted. Polyvinyl pyrrolidone (PVP) K30 and K90 used was Special Grade from FUJIFILM Wako Pure Chemical Corporation. Polyvinyl pyrrolidone (PVP) K120 used was PVP K-120 from Ashland Japan Ltd. Hydroxypropylmethylcellulose (HPMC) used was METOLOSE (registered trademark) 90SH-100 from Shin-Etsu Chemical Co., Ltd. Polyethylene glycol (PEG) used was 1st Grade from FUJIFILM Wako Pure Chemical Corporation. Sodium polyacrylate (NaPAA) used was ARONVIS (registered trademark) MX from Toagosei Company, Limited. Tert-butylperoxy-2-ethylhexanoate used was PERBUTYL O from NOF CORPORATION. Tert-butyl peroxypivalate used was PERBUTYL PV from NOF CORPORATION. 1-dodecanethiol used was Special Grade from FUJIFILM Wako Pure Chemical Corporation.

The following description will discuss methods for evaluating and measuring N-alkylmaleimide-based polymers obtained by Examples.

<Average particle diameter>

In 20 g of ion-exchange water, 150 mg of an N-alkylmaleimide-based polymer was dispersed, and a particle size distribution measuring machine MT-3300 from NIKKISO CO., LTD. was used to carry out measurement. A shape was set to a perfect sphere, and a refractive index was set to 1.549.

<Particle shape>

Tabletop Microscope TM3030Plus from Hitachi High-Tech Corporation was used to set an image signal to a secondary electron and carry out observation in a standard mode at a magnification of 30 times to 100 times.

<N-alkylmaleimide content in polymer>

A predetermined amount of the N-alkylmaleimide-based polymer was dissolved in deuterated chloroform (approximately 5% by weight), and 400MHzNMR (JNM-ECZ400S/L1) from JEOL Ltd. was used to carry out $^1$H-NMR measurement with respect to a resulting solution. For a copolymer of N-alkylmaleimide and styrene, an N-alkylmaleimide content was calculated from an integral ratio of a peak between 5.0 ppm and 0.3 ppm to a peak between 8.0 ppm and 5.5 ppm.

<Molecular weight of polymer>

GPC (HLC-8320GPC) available from TOSOH CORPORATION was used to measure a molecular weight distribution. Two columns (TSKgel Super HM-H available from TOSOH CORPORATION) were used, a column temperature was set at 40°C, and tetrahydrofuran was used as an eluent to carry out measurement. Standard polystyrene available from TOSOH CORPORATION and having a known molecular weight was used to prepare a calibration curve of a molecular weight.

<Dispersant content in resin composition>

A predetermined amount of a resin composition was dissolved in deuterated chloroform (approximately 5% by weight), and 400MHzNMR (JNM-ECZ400S/L1) from JEOL Ltd. was used to carry out $^1$H-NMR measurement with respect to a resulting solution. For the copolymer of N-alkylmaleimide and styrene, and a resin composition with PEG, a dispersant content was calculated from a ratio between (a) a sum of integral values of the peaks of the N-alkylmaleimide-based polymer between 8.0 ppm and 5.5 ppm and between 5.0 ppm and 0.3 ppm and (b) an integral value of a peak of a dispersant at 3.6 ppm.

< Film forming (1)>

The N-alkylmaleimide-based polymer was dissolved in methylene chloride having an amount 10 times the amount of the N-alkylmaleimide-based polymer, and an applicator was used to spread a resulting solution onto a release PET film. The PET film on which a polymer solution was spread was covered with a lid, and a solvent was gradually evaporated. A polymer film formed on the release PET film was peeled off and dried under reduced pressure for 24 hours by a vacuum dryer set at 105°C.

< Film forming (2) >

The N-alkylmaleimide-based polymer was added to chloroform, and a polymer solution of a desired concentration was prepared by stirring using a magnetic stirrer or mixer. The polymer solution thus obtained was filtered with a 30 μm PP filter, and then spread on a PET film using a coater. The spread polymer solution was dried by gradually increasing the temperature in the range of 60°C to 155°C using three ovens with different temperature settings. Thereafter, a polymer film formed on the PET film was peeled off, and four sides of the film were fixed. The film was dried again in an oven at the predetermined temperature, so that a formed film without any residual solvent [<0.2 wt% (gas chromatography analysis)] and with a film thickness of approximately 50 μm was obtained.

<Glass transition point (Tg)>

A differential scanning calorimeter DSC-60 from SHIMADZU CORPORATION was used to measure a glass transition point (Tg) during second scan temperature increase (rate of temperature increase = 10°C/min) of the formed

film obtained in < Film forming (1)>.

<Tensile strength>

TENSILON Universal Material Testing Instrument (TENSILON RTG-1210) available from A&D Company, Limited was used to measure a tensile strength. The formed film obtained in <Film forming (2)> was cut into strips each having a width of 10 mm and a length of 90 mm, and the strips were each used as a test piece. A tensile test was carried out under conditions of a chuck-to-chuck distance of 50 mm and a tensile speed of 30 mm/min so as to measure a tensile elongation at break and a tensile stress at break.

<Haze>

In order to evaluate transparency of the N-alkylmaleimide-based polymer, a spectrophotometric hazemeter (SH7000 from NIPPON DENSHOKU INDUSTRIES CO., LTD.) was used to measure a haze of the formed film obtained in <Film forming (2)>.

<Photoelastic constant>

An automatic birefringence control device ABR-EX available from UNIOPT Co., Ltd was used to carry out measurement. A retardation was measured by applying, at intervals of approximately 0.1 N, a stress of 0 N to 2 N to the film formed in < Film forming (1) > and having a width of 4 mm to 5 mm and a thickness of 35 μm to 55 μm. A photoelastic constant C was calculated from the retardation and a width of a measured part in a range of 0.3 N to 2 N.

<Intrinsic birefringence>

IMC-11A9, which is a biaxial film stretching device available from Imoto machinery Co., LTD, was used to uniaxially stretch, at a temperature of not lower than Tg, a stretch speed of 40 mm to 100 mm/min, and a stretch ratio of 2 times to 3 times, the film formed in <Film forming (1)>. Thereafter, the film was left to stand for not less than 24 hours so as to relax an internal stress, and Fourier transform infrared spectrophotometer IRTracer-100 available from SHIMADZU CORPORATION was used to measure absorbance in an infrared region. An infrared dichroism method was used to evaluate a degree of orientation f of each stretched film from the measured absorbance. A micrometer was used to measure each film thickness d. An automatic birefringence control device ABR-10A available from UNIOPT Co., Ltd. was used to measure a retardation Re of each stretched film. Intrinsic birefringence $\Delta n^0$ was calculated from measurement values of the degree of orientation f, the film thickness d, and the retardation Re with use of the following formula (3):

$$Re = \Delta n^0 \cdot f \cdot d \quad (3)$$

<Temperature constant of intrinsic birefringence>

A temperature of the stretched film prepared in <Intrinsic birefringence> was increased in 5°C increments from 15°C to 70°C, and the automatic birefringence control device ABR-10A available from UNIOPT Co., Ltd. was used to measure retardation at each temperature so as to calculate the temperature constant of the intrinsic birefringence $d\Delta n^0/dT$.

Example 1

In a 500 mL four-necked flask provided with a stirrer, a nitrogen introduction tube, and a thermometer, 0.852 g of PVP K30, 346.4 g of distilled water, 103.9 g of N-ethylmaleimide, 25.8 g of styrene, 18.4 g of toluene, and 0.100 g of tert-butylperoxy-2-ethylhexanoate were placed, and bubbled with nitrogen for 1 hour. Thereafter, suspension polymerization was carried out by holding a resulting mixture at 70°C for 2 hours while stirring the mixture at 600 rpm. After completion of suspension polymerization, the contents of the flask were introduced into 2,500 g of distilled water stirred with a magnetic stirrer, and were filtered so as to collect generated N-alkylmaleimide-based polymer particles. The collected polymer particles were cleaned 6 times with 2,000 g of distilled water, and then cleaned 5 times with 1,582 g of methanol. Subsequently, the polymer particles were cleaned once with a mixed solvent of 487 g of toluene and 1,137 g of methanol, and then cleaned 5 times with 1,582 g of methanol. Further, the polymer particles were cleaned once with a mixed solvent of 827 g toluene and 827 g methanol, and then cleaned 5 times with 1,582 g methanol. The cleaned polymer particles were placed in a dryer set at 95°C, and were dried under vacuum. Drying was stopped at a point in

time when there was no decrease in weight by drying, and 74.5 g of an N-ethylmaleimide/styrene copolymer was obtained. A result of observation of a particle shape of the polymer particles by a tabletop microscope showed that the polymer particles had a particle diameter of approximately 50 pm to approximately 2,000 pm. Tables 1 and 2 show a preparation composition for polymerization, a yield, an N-ethylmaleimide unit content in a copolymer, Mw, Mw/Mn, and a dispersant content in a resin composition. Table 3 shows solubility in chloroform and a haze of a formed film.

Comparative Example 1

An N-ethylmaleimide/styrene copolymer was produced as in the case of Example 1 except that, as a dispersant, 0.852 g of hydroxypropyl methylcellulose (HPMC), which is a nonionic compound having hydrogen bonded to oxygen, was used instead of PVP K30. As a result, 67.5 g of an N-alkylmaleimide-based polymer was obtained. Tables 1 and 2 show a preparation composition for polymerization, a yield, an average particle diameter of N-alkylmaleimide-based polymer particles, an N-ethylmaleimide unit content in an N-alkylmaleimide-based polymer, Mw, and Mw/Mn. Table 3 shows solubility in chloroform and mechanical strength and a haze of a formed film.

A gel insoluble in chloroform was generated by using, as the dispersant, HPMC, which is a nonionic compound having hydrogen bonded to oxygen. Further, in a case where a film was formed, the film had a greater haze value. In addition, the N-alkylmaleimide-based polymer had lower mechanical strength than an N-alkylmaleimide-based copolymer which was produced in Example 2 described later in which a ratio of units derived from N-alkylmaleimide is substantially equivalent to a ratio of units derived from N-alkylmaleimide in Comparative Example 1.

Example 2

An N-ethylmaleimide/styrene copolymer was produced as in the case of Example 1 except that a polymerization time was changed from 2 hours to 2.25 hours. As a result, 77.3 g of an N-alkylmaleimide-based polymer was obtained. A result of observation of a particle shape of N-alkylmaleimide-based polymer particles by a tabletop microscope showed that the polymer particles had a particle diameter of approximately 50 pm to approximately 2,000 pm. Tables 1 and 2 show a preparation composition for polymerization, a yield, an N-ethylmaleimide unit content in an N-alkylmaleimide-based polymer, Mw, Mw/Mn, and a dispersant content in a resin composition. Table 3 shows solubility in chloroform and heat resistance, mechanical strength, and an optical characteristic of a formed film.

As shown in Tables 1 and 2, extension of the polymerization time resulted in an increase in N-ethylmaleimide unit content. Further, the N-alkylmaleimide-based polymer had mechanical strength, transparency, a photoelastic constant, and intrinsic birefringence of a temperature constant that were equivalent to those of an N-alkylmaleimide-based polymer which was obtained by bulk polymerization and which is shown in Comparative Example 2 described later.

Comparative Example 2

In a test tube, 3.8 g of N-ethylmaleimide and 1.2 g of styrene were placed and mixed. After the test tube was sealed, the contents thereof were mixed by sufficiently shaking the test tube. The test tube was left to stand in a hot water bath at 70°C for 24 hours, and bulk polymerization was carried out. A resulting N-alkylmaleimide-based polymer was a columnar mass having adhered to the test tube. The columnar mass was removed from the test tube in order to remove unreacted monomers. Temporarily, the columnar mass was crushed into approximately 1 cm pieces and charged into methylene chloride, so that a transparent N-alkylmaleimide-based polymer solution was produced. Subsequently, the N-alkylmaleimide-based polymer solution thus obtained was dropped into methanol so as to precipitate the N-alkylmaleimide-based polymer. Filtering was carried out with filter paper so as to remove filtrate in which the unreacted monomers were dissolved, and then the N-alkylmaleimide-based polymer remaining on the filter paper was collected and dried under reduced pressure for 3 hours in a desiccator. Thereafter, the N-alkylmaleimide-based polymer was further dried under reduced pressure for 24 hours in a vacuum dryer at 105°C, so that 4.0 g of the N-alkylmaleimide-based polymer was obtained. A particle shape of N-alkylmaleimide-based polymer particles was visually observed to be an irregular shape. Tables 1 and 2 show a preparation composition for polymerization, a yield, an N-ethylmaleimide unit content in an N-alkylmaleimide-based polymer, Mw, Mw/Mn, and a dispersant content in a resin composition. Table 3 shows solubility in chloroform and heat resistance, mechanical strength, and an optical characteristic of a formed film.

Production of the N-alkylmaleimide-based polymer by bulk polymerization resulted in obtainment of a polymer that has mechanical strength and transparency equivalent to those of a polymer obtained in Example 2, that has low birefringence (has not only a low absolute value of a photoelastic constant but also a low absolute value of intrinsic birefringence), and that can maintain its low birefringence under a wide range of environmental temperatures. However, unlike the production method of Example 2, in order to remove the unreacted monomers, the production method of Comparative Example 2 further required (i) an operation to remove the produced N-alkylmaleimide-based polymer from the test tube, (ii) an operation to break the N-alkylmaleimide-based polymer into pieces and dissolve the pieces in a

solvent, and (iii) an operation to precipitate the N-alkylmaleimide-based polymer from a resulting solution.

Comparative Example 3

In a 75 mL ampoule tube, 6.1 g of N-ethylmaleimide, 2.7 g of styrene, 35.4 g of toluene, and 0.019 g of tert-butyl peroxypivalate were placed, and the ampoule tube was deaerated. Thereafter, the ampoule tube was melt-sealed by a burner. The sealed ampoule tube was placed in a hot water bath (set at 50°C) attached to a shaker, shaken for 10 hours, and solution polymerization was carried out. A resulting product was charged into 400 mL of chloroform so as to produce a transparent N-alkylmaleimide-based polymer solution. Subsequently, the N-alkylmaleimide-based polymer solution thus obtained was dropped into methanol so as to precipitate an N-alkylmaleimide-based polymer. Filtering was carried out with filter paper, and the N-alkylmaleimide-based polymer remaining on the filter paper was collected and dried under reduced pressure for 10 hours in a vacuum dryer set at 95°C, so that 7.9 g of the N-alkylmaleimide-based polymer was obtained. A particle shape of N-alkylmaleimide-based polymer particles was visually observed to be an irregular shape. Tables 1 and 2 show a preparation composition for polymerization, a yield, an N-ethylmaleimide unit content in an N-alkylmaleimide-based polymer, Mw, Mw/Mn, and a dispersant content in a resin composition. Table 3 shows solubility in chloroform and heat resistance and an optical characteristic of a formed film.
Production of the N-alkylmaleimide-based polymer by solution polymerization resulted in a further reduction in Mw as compared with the polymer produced in Example 2. This made a formed film brittle and did not lead to evaluation of mechanical strength.

Example 3

An N-ethylmaleimide/styrene copolymer was produced as in the case of Example 1 except that a polymerization time was changed from 2 hours to 5 hours. As a result, 84.1 g of an N-alkylmaleimide-based polymer was obtained. A result of observation of a particle shape of N-alkylmaleimide-based polymer particles by a tabletop microscope showed that the polymer particles had a particle diameter of approximately 50 pm to approximately 2,000 pm. Tables 1 and 2 show a preparation composition for polymerization, a yield, an N-ethylmaleimide unit content in an N-alkylmaleimide-based polymer, Mw, Mw/Mn, and a dispersant content in a resin composition. Table 3 shows solubility in chloroform.
As shown in Tables 1 and 2, extension of the polymerization time resulted in an increase in N-ethylmaleimide unit content.

Example 4

An N-ethylmaleimide/styrene copolymer was produced as in the case of Example 2 except that an added amount of PVP K30 was changed to 17.04 g. As a result, 69.8 g of an N-alkylmaleimide-based polymer was obtained. N-alkylmaleimide-based polymer particles had an average particle diameter of 490 pm, and an increase in added amount of PVP K30 made it possible to prevent or reduce generation of particles in the order of millimeters. Tables 1 and 2 show a preparation composition for polymerization, a yield, an N-ethylmaleimide unit content in an N-alkylmaleimide-based polymer, Mw, Mw/Mn, and a dispersant content in a resin composition. Table 3 shows solubility in chloroform and a haze of a formed film.

Example 5

An N-ethylmaleimide/styrene copolymer was produced as in the case of Example 2 except that 0.852 g of PVP K30 was changed to 3.04 g of PVP K90. As a result, 75.0 g of an N-alkylmaleimide-based polymer was obtained. N-alkylmaleimide-based polymer particles had an average particle diameter of 359 pm, and a change from PVP K30 to PVP K90 made it possible to prevent or reduce generation of particles in the order of millimeters. Tables 1 and 2 show a preparation composition for polymerization, a yield, an N-ethylmaleimide unit content in an N-alkylmaleimide-based polymer, Mw, Mw/Mn, and a dispersant content in a resin composition. Table 3 shows solubility in chloroform.

Example 6

An N-ethylmaleimide/styrene copolymer was produced as in the case of Example 5 except that a polymerization time was changed from 2.25 hours to 5 hours. As a result, 83.4 g of an N-alkylmaleimide-based polymer was obtained. Tables 1 and 2 show a preparation composition for polymerization, a yield, an average particle diameter of N-alkylmaleimide-based polymer particles, an N-ethylmaleimide unit content in an N-alkylmaleimide-based polymer, Mw, Mw/Mn, and a dispersant content in a resin composition. Table 3 shows solubility in chloroform.
As shown in Tables 1 and 2, extension of the polymerization time resulted in an increase in N-ethylmaleimide

unit content.

Example 7

An N-ethylmaleimide/styrene copolymer was produced as in the case of Example 6 except that a feeding amount of N-ethylmaleimide was changed to 98.1 g and that a feeding amount of styrene was changed to 31.8 g. Tables 1 and 2 show a preparation composition for polymerization, a yield, an average particle diameter of N-alkylmaleimide-based polymer particles, an N-ethylmaleimide unit content in an N-alkylmaleimide-based polymer, Mw, Mw/Mn, and a dispersant content in a resin composition. Table 3 shows solubility in chloroform and a haze of a formed film.

As shown in Tables 1 and 2, a reduction in N-ethylmaleimide ratio in preparation for polymerization made it possible to control an N-ethylmaleimide unit content in the N-alkylmaleimide-based polymer.

Example 8

An N-ethylmaleimide/styrene copolymer was produced as in the case of Example 6 except that a feeding amount of N-ethylmaleimide was changed to 70.5 g and that a feeding amount of styrene was changed to 58.7 g. Tables 1 and 2 show a preparation composition for polymerization, a yield, an average particle diameter of N-alkylmaleimide-based polymer particles, an N-ethylmaleimide unit content in an N-alkylmaleimide-based polymer, Mw, Mw/Mn, and a dispersant content in a resin composition. Table 3 shows solubility in chloroform and heat resistance of a formed film.

As shown in Tables 1 to 3, a reduction in N-ethylmaleimide ratio in preparation for polymerization made it possible to control an N-ethylmaleimide unit content in the N-alkylmaleimide-based polymer. As compared with the formed film of the N-alkylmaleimide-based polymer which was produced in Example 2 and in which an N-ethylmaleimide unit content was 68% by weight, a formed film had a lower Tg, and heat resistance thereof was more successfully controlled.

Example 9

An N-ethylmaleimide/styrene copolymer was produced as in the case of Example 5 except that an added amount of PVP K90 was changed to 0.856 g. As a result, 73.4 g of an N-alkylmaleimide-based polymer was obtained. N-alkylmaleimide-based polymer particles had an average particle diameter of was 335 pm, and even a reduction in added amount of PVP K90 made it almost possible to maintain the average particle diameter. Tables 1 and 2 show a preparation composition for polymerization, a yield, an N-ethylmaleimide unit content in an N-alkylmaleimide-based polymer, Mw, Mw/Mn, and a dispersant content in a resin composition. Table 3 shows solubility in chloroform and a haze of a formed film.

Example 10

An N-ethylmaleimide/styrene copolymer was produced as in the case of Example 5 except that an added amount of PVP K90 was changed to 0.416 g. As a result, 75.8 g of an N-alkylmaleimide-based polymer was obtained. N-alkylmaleimide-based polymer particles had an average particle diameter of 429 pm, and the average particle diameter tended to be increased by reducing the added amount of PVP K90 to 0.416 g. Tables 1 and 2 show a preparation composition for polymerization, a yield, an N-ethylmaleimide unit content in an N-alkylmaleimide-based polymer, Mw, Mw/Mn, and a dispersant content in a resin composition. Table 3 shows solubility in chloroform and a haze of a formed film.

As shown in Table 3, the haze of the formed film tended to be decreased by reducing the added amount of PVP K90.

Example 11

An N-cyclohexylmaleimide/styrene copolymer was produced as in the case of Example 8 except that 81.7 g of N-cyclohexylmaleimide was used instead of N-ethylmaleimide and that a feeding amount of styrene was changed to 47.5 g. Tables 1 and 2 show a preparation composition for polymerization, a yield, an average particle diameter of N-alkylmaleimide-based polymer particles, an N-cyclohexylmaleimide unit content in an N-alkylmaleimide-based polymer, Mw, Mw/Mn, and a dispersant content in a resin composition. Table 3 shows solubility in chloroform and heat resistance of a formed film.

Example 12

An N-tert-butylmaleimide/styrene copolymer was produced as in the case of Example 8 except that 77.1 g of

N-tert-butylmaleimide was used instead of N-ethylmaleimide and that a feeding amount of styrene was changed to 52.4 g. Tables 1 and 2 show a preparation composition for polymerization, a yield, an average particle diameter of N-alkylmaleimide-based polymer particles, an N-tert-butylmaleimide unit content in an N-alkylmaleimide-based polymer, Mw, Mw/Mn, and a dispersant content in a resin composition. Table 3 shows solubility in chloroform and heat resistance of a formed film.

Example 13

An N-ethylmaleimide/styrene copolymer was produced as in the case of Example 1 except that a polymerization time was changed from 2 hours to 3 hours, that PVP K30 was changed to PVP K120, and that an amount of tert-butylperoxy-2-ethylhexanoate was changed from 0.100 g to 0.164 g. As a result, 79.9 g of an N-alkylmaleimide-based polymer was obtained. N-alkylmaleimide-based polymer particles had an average particle diameter of 297 pm, and a change from PVP K30 to PVP K120 made it possible to prevent or reduce generation of particles in the order of millimeters. Tables 1 and 2 show a preparation composition for polymerization, a yield, an N-ethylmaleimide unit content in an N-alkylmaleimide-based polymer, Mw, Mw/Mn, and a dispersant content in a resin composition. Table 3 shows solubility in chloroform and a haze of a formed film.

Example 14

An N-ethylmaleimide/styrene copolymer was produced as in the case of Example 13 except that a feeding amount of N-ethylmaleimide was changed to 104.5 g, that a feeding amount of styrene was changed to 29.0 g, that a feeding amount of toluene was changed to 14.9 g, and that an added amount of PVP K120 was changed to 0.276 g. As a result, 83.5 g of an N-alkylmaleimide-based polymer was obtained. Tables 1 and 2 show a preparation composition for polymerization, a yield, an average particle diameter of N-alkylmaleimide-based polymer particles, an N-ethylmaleimide unit content in an N-alkylmaleimide-based polymer, Mw, Mw/Mn, and a dispersant content in a resin composition. Table 3 shows solubility in chloroform and a haze of a formed film.

Example 15

An N-ethylmaleimide/styrene copolymer was produced as in the case of Example 13 except that 0.855 g of PVP K120 was changed to 0.216 g of sodium polyacrylate. As a result, 83.1 g of an N-alkylmaleimide-based polymer was obtained. Tables 1 and 2 show a preparation composition for polymerization, a yield, an average particle diameter of N-alkylmaleimide-based polymer particles, an N-ethylmaleimide unit content in an N-alkylmaleimide-based polymer, Mw, Mw/Mn, and a dispersant content in a resin composition. Table 3 shows solubility in chloroform and a haze of a formed film.

Example 16

An N-ethylmaleimide/styrene copolymer was produced as in the case of Example 14 except that a feeding amount of N-ethylmaleimide was changed to 103.3 g, that a feeding amount of styrene was changed to 30.2 g, and that 0.276 g of PVP K120 was changed to 0.075 g of polyethylene glycol. As a result, 87.5 g of an N-alkylmaleimide-based polymer was obtained. Tables 1 and 2 show a preparation composition for polymerization, a yield, an average particle diameter of N-alkylmaleimide-based polymer particles, an N-ethylmaleimide unit content in an N-alkylmaleimide-based polymer, Mw, Mw/Mn, and a dispersant content in a resin composition. Table 3 shows solubility in chloroform and heat resistance and an optical characteristic of a formed film.

Example 17

An N-ethylmaleimide/styrene copolymer was produced as in the case of Example 16 except that an added amount of polyethylene glycol was changed to 0.031 g. As a result, 91.2 g of an N-alkylmaleimide-based polymer was obtained. Tables 1 and 2 show a preparation composition for polymerization, a yield, an average particle diameter of N-alkylmaleimide-based polymer particles, an N-ethylmaleimide unit content in an N-alkylmaleimide-based polymer, Mw, Mw/Mn, and a dispersant content in a resin composition. Table 3 shows solubility in chloroform and heat resistance and an optical characteristic of a formed film.

Example 18

In a 500 mL four-necked flask provided with a stirrer, a nitrogen introduction tube, and a thermometer, 0.860

g of PVP K30, 347.1 g of distilled water, 99.2 g of N-ethylmaleimide, 22.6 g of styrene, 26.9 g of methyl methacrylate, and 0.185 g of tert-butylperoxy-2-ethylhexanoate were placed, and bubbled with nitrogen for 1 hour. Thereafter, suspension polymerization was carried out by holding a resulting mixture at 70°C for 2 hours while stirring the mixture at 600 rpm. After completion of suspension polymerization, the contents of the flask were introduced into 2,500 g of distilled water stirred with a magnetic stirrer, and were filtered so as to collect generated N-alkylmaleimide-based polymer particles. The collected polymer particles were cleaned 6 times with 2,000 g of distilled water, and then cleaned 5 times with 1,582 g of methanol. The cleaned polymer particles were placed in a dryer set at 90°C, and were dried under vacuum. Drying was stopped at a point in time when there was no decrease in weight by drying, and 96.1 g of an N-ethylmaleimide/styrene/methyl methacrylate copolymer was obtained. Tables 1 and 2 show a preparation composition for polymerization, a yield, an average particle diameter of N-alkylmaleimide-based polymer particles, an N-ethylmaleimide unit content in a copolymer, Mw, Mw/Mn, and a dispersant content in a resin composition. Table 3 shows solubility in chloroform and a haze of a formed film.

Example 19

An N-ethylmaleimide/styrene/methyl methacrylate copolymer was produced as in the case of Example 18 except that a feeding amount of N-ethylmaleimide was changed to 96.4 g, that a feeding amount of styrene was changed to 24.1 g, that an amount of methyl methacrylate was changed to 28.3 g, that 0.860 g of PVP K30 was changed to 0.029 g of polyethylene glycol, that a polymerization time was changed to 7 hours, and that 0.148 g of 1-dodecanethiol was added as a chain transfer agent. As a result, 108.4 g of an N-alkylmaleimide-based polymer was obtained. Tables 1 and 2 show a preparation composition for polymerization, a yield, an average particle diameter of N-alkylmaleimide-based polymer particles, an N-ethylmaleimide unit content in an N-alkylmaleimide-based polymer, Mw, Mw/Mn, and a dispersant content in a resin composition. Table 3 shows solubility in chloroform and a haze of a formed film.

Comparative Example 4

An N-ethylmaleimide/styrene/methyl methacrylate copolymer was produced as in the case of Example 18 except that, as a dispersant, hydroxypropyl methylcellulose (HPMC), which is a nonionic compound having hydrogen bonded to oxygen, was used instead of PVP K30. As a result, 85.3 g of an N-alkylmaleimide-based polymer was obtained. Tables 1 and 2 show a preparation composition for polymerization, a yield, an average particle diameter of N-alkylmaleimide-based polymer particles, an N-ethylmaleimide unit content in an N-alkylmaleimide-based polymer, Mw, and Mw/Mn. Table 3 shows solubility in chloroform.

A gel insoluble in chloroform was generated by using, as the dispersant, HPMC, which is a nonionic compound having hydrogen bonded to oxygen.

Comparative Example 5

In a test tube, 3.15 g of N-ethylmaleimide, 0.85 g of styrene, 1.00 g of methyl methacrylate were placed and mixed. After the test tube was sealed, the contents thereof were mixed by sufficiently shaking the test tube. The test tube was left to stand in a hot water bath at 70°C for 24 hours, and bulk polymerization was carried out. A resulting N-alkylmaleimide-based polymer was a columnar mass having adhered to the test tube. The columnar mass was removed from the test tube in order to remove unreacted monomers. Temporarily, the columnar mass was crushed into approximately 1 cm pieces and charged into methylene chloride, so that a transparent N-alkylmaleimide-based polymer solution was produced. Subsequently, the N-alkylmaleimide-based polymer solution thus obtained was dropped into methanol so as to precipitate the N-alkylmaleimide-based polymer. Filtering was carried out with filter paper so as to remove filtrate in which the unreacted monomers were dissolved, and then the N-alkylmaleimide-based polymer remaining on the filter paper was collected and dried under reduced pressure for 3 hours in a desiccator. Thereafter, the N-alkylmaleimide-based polymer was further dried under reduced pressure for 24 hours in a vacuum dryer at 105°C, so that 3.9 g of the N-alkylmaleimide-based polymer was obtained.

A particle shape of N-alkylmaleimide-based polymer particles was visually observed to be an irregular shape. Tables 1 and 2 show a preparation composition for polymerization, a yield, an N-ethylmaleimide unit content in an N-alkylmaleimide-based polymer, Mw, Mw/Mn, and a dispersant content in a resin composition. Table 3 shows solubility in chloroform and heat resistance, mechanical strength, and an optical characteristic of a formed film.

Production of the N-alkylmaleimide-based polymer by bulk polymerization resulted in obtainment of a polymer which has transparency equivalent to that of the polymer obtained in Example 18. However, unlike the production method of Example 18, in order to remove the unreacted monomers, the production method of Comparative Example 5 further required (i) an operation to remove the produced N-alkylmaleimide-based polymer from the test tube, (ii) an operation to break the N-alkylmaleimide-based polymer into pieces and dissolve the pieces in a solvent, and (iii) an operation to

precipitate the N-alkylmaleimide-based polymer from a resulting solution.

Comparative Example 6

A resin composition was obtained by adding 3.36 parts by weight of PVP K30 to 100 parts by weight of the N-alkylmaleimide-based polymer synthesized in Comparative Example 2. The resin composition thus obtained was used to obtain a formed film in <Film forming (2)>.

Table 2 shows a dispersant content in a resin composition. Table 3 shows solubility in chloroform and a haze of a formed film.

An increase in dispersant content in the resin composition resulted in an increase in haze of the formed film.

Example 20

In a 200 mL four-necked flask provided with a stirrer, a nitrogen introduction tube, and a thermometer, 0. 170 g of PVP K30, 69.2 g of a 20% by weight aqueous sodium chloride solution, 19.83 g of N-ethylmaleimide, 6.10 g of styrene, 3.7 g of toluene, and 0.0202 g of tert-butylperoxy-2-ethylhexanoate were placed, and bubbled with nitrogen for 1 hour. Thereafter, suspension polymerization was carried out by holding a resulting mixture at 70°C for 5 hours while stirring the mixture at 600 rpm. After completion of suspension polymerization, the contents of the flask were introduced into 500 g of distilled water stirred with a magnetic stirrer, and were filtered so as to collect generated N-alkylmaleimide-based polymer particles. The collected polymer particles were cleaned 6 times with 500 g of distilled water, and then cleaned 5 times with 316.4 g of methanol. Subsequently, the polymer particles were cleaned once with a mixed solvent of 97.4 g of toluene and 227.4 g of methanol, and then cleaned 5 times with 316.4 g of methanol. Further, the polymer particles were cleaned once with a mixed solvent of 165.4 g of toluene and 165.4 g of methanol, and then cleaned 5 times with 316.4 g of methanol. The cleaned polymer particles were placed in a dryer set at 95°C, and were dried under vacuum. Drying was stopped at a point in time when there was no decrease in weight by drying, and 19.3 g of an N-ethylmaleimide/styrene copolymer was obtained. A result of observation of a particle shape of the polymer particles by a tabletop microscope showed that the polymer particles had a particle diameter of approximately 50 pm to approximately 2,000 pm. Tables 1 and 2 show a preparation composition for polymerization, a yield, an N-ethylmaleimide unit content in a copolymer, Mw, and Mw/Mn.

Example 21

In a 500 mL four-necked flask provided with a stirrer, a nitrogen introduction tube, and a thermometer, 0.074 g of polyethylene glycol, 346.1 g of a 5% by weight aqueous sodium chloride solution, 103.3 g of N-ethylmaleimide, 30.2 g of styrene, 14.8 g of toluene, and 0.166 g of tert-butylperoxy-2-ethylhexanoate were placed, and bubbled with nitrogen for 1 hour. Thereafter, suspension polymerization was carried out by holding a resulting mixture at 70°C for 3 hours while stirring the mixture at 600 rpm. After completion of suspension polymerization, the contents of the flask were introduced into 2,500 g of distilled water stirred with a magnetic stirrer, and were filtered so as to collect generated N-alkylmaleimide-based polymer particles. The collected polymer particles were cleaned 6 times with 2,000 g of distilled water, and then cleaned 5 times with 1,582 g of methanol. Subsequently, the polymer particles were cleaned once with a mixed solvent of 487 g of toluene and 1,137 g of methanol, and then cleaned 5 times with 1,582 g of methanol. Further, the polymer particles were cleaned once with a mixed solvent of 827 g toluene and 827 g methanol, and then cleaned 5 times with 1,582 g methanol. The cleaned polymer particles were placed in a dryer set at 95°C, and were dried under vacuum. Drying was stopped at a point in time when there was no decrease in weight by drying, and 92.1 g of an N-ethylmaleimide/styrene copolymer was obtained. A result of observation of a particle shape of polymer particles by a tabletop microscope showed that the polymer particles had a particle diameter of approximately 50 pm to approximately 500 pm. Tables 1 and 2 show a preparation composition for polymerization, a yield, an N-ethylmaleimide unit content in a copolymer, Mw, and Mw/Mn.

Example 22

An N-ethylmaleimide/styrene copolymer was produced as in the case of Example 21 except that an aqueous medium was changed from the 5% by weight aqueous sodium chloride solution to a 2% by weight aqueous sodium sulfate solution. As a result, 90.8 g of an N-alkylmaleimide-based polymer was obtained. A result of observation of a particle shape of polymer particles by a tabletop microscope showed that the polymer particles had a particle diameter of approximately 50 pm to approximately 500 pm. Tables 1 and 2 show a preparation composition for polymerization, a yield, an N-ethylmaleimide unit content in a copolymer, Mw, and Mw/Mn.

Comparative Example 7

In a test tube, 3.8 g of N-ethylmaleimide and 1.2 g of styrene were placed and mixed. After the test tube was sealed, the contents thereof were mixed by sufficiently shaking the test tube. The test tube was left to stand in a hot water bath at 70°C for 24 hours, and bulk polymerization was carried out. A resulting N-alkylmaleimide-based polymer was a columnar mass having adhered to the test tube. The columnar mass was removed from the test tube in order to remove unreacted monomers. Temporarily, the columnar mass was crushed into approximately 1 cm pieces and charged into methylene chloride, so that a transparent N-alkylmaleimide-based polymer solution was produced. Subsequently, the N-alkylmaleimide-based polymer solution thus obtained was dropped into methanol so as to precipitate the N-alkylmaleimide-based polymer. Filtering was carried out with filter paper so as to remove filtrate in which the unreacted monomers were dissolved, and then the N-alkylmaleimide-based polymer remaining on the filter paper was collected and dried under reduced pressure for 3 hours in a desiccator. Thereafter, the N-alkylmaleimide-based polymer was further dried under reduced pressure for 24 hours in a vacuum dryer at 105°C, so that 4.0 g of the N-alkylmaleimide-based polymer was obtained. A particle shape of N-alkylmaleimide-based polymer particles was visually observed to be an irregular shape. Tables 1 and 2 show a preparation composition for polymerization, a yield, an N-ethylmaleimide unit content in an N-alkylmaleimide-based polymer, Mw, and Mw/Mn.

In Comparative Example 7, production of the N-alkylmaleimide-based polymer by bulk polymerization resulted in obtainment of a polymer which has an N-ethylmaleimide unit content equivalent to that of the polymer obtained in Example 20. However, unlike the production method of Example 20, in order to remove the unreacted monomers, the production method of Comparative Example 1 further required (i) an operation to remove the produced N-alkylmaleimide-based polymer from the test tube, (ii) an operation to break the N-alkylmaleimide-based polymer into pieces and dissolve the pieces in a solvent, and (iii) an operation to precipitate the N-alkylmaleimide-based polymer from a resulting solution.

Example 23

An N-ethylmaleimide/styrene copolymer was produced as in the case of Example 20 except that, as an aqueous medium, distilled water was used instead of the 20% by weight aqueous sodium chloride solution. As a result, 15.9 g of an N-alkylmaleimide-based polymer was obtained. Tables 1 and 2 show a preparation composition for polymerization, a yield, an average particle diameter of N-alkylmaleimide-based polymer particles, an N-ethylmaleimide unit content in an N-alkylmaleimide-based polymer, Mw, and Mw/Mn. It is understood from results of Examples 20 and 23 that use of an aqueous medium containing a salt results in a further increase in yield.

Example 24

An N-ethylmaleimide/styrene copolymer was produced as in the case of Example 21 except that, as an aqueous medium, distilled water was used instead of the 5% by weight aqueous sodium chloride solution. As a result, 87.5 g of an N-alkylmaleimide-based polymer was obtained. Table 1 shows a preparation composition for polymerization, a yield, an average particle diameter of N-alkylmaleimide-based polymer particles, an N-ethylmaleimide unit content in an N-alkylmaleimide-based polymer, Mw, and Mw/Mn. It is understood from results of Examples 21 and 24 that use of an aqueous medium containing a salt results in a further increase in yield.

[Table 1]

| Example | Preparation | | | | | | |
|---|---|---|---|---|---|---|---|
| | Monomer | | | | Toluene | Aqueous medium | |
| | | RMI | St | MMA | | | |
| No. | | (part by weight) | (part by weight) | (part by weight) | (part by weight) | | (part by weight) |
| Example 1 | EMI | 80 | 20 | 0 | 14 | distilled water | 267 |
| Comparative Example 1 | EMI | 80 | 20 | 0 | 14 | distilled water | 267 |
| Example 2 | EMI | 80 | 20 | 0 | 14 | distilled water | 267 |
| Comparative Example 2 | EMI | 77 | 23 | 0 | 0 | distilled water | 0 |
| Comparative Example 3 | EMI | 69 | 31 | 0 | 402 | distilled water | 0 |
| Example 3 | EMI | 80 | 20 | 0 | 14 | distilled water | 267 |
| Example 4 | EMI | 80 | 20 | 0 | 14 | distilled water | 267 |
| Example 5 | EMI | 80 | 20 | 0 | 14 | distilled water | 264 |
| Example 6 | EMI | 80 | 20 | 0 | 14 | distilled water | 264 |
| Example 7 | EMI | 76 | 24 | 0 | 14 | distilled water | 265 |
| Example 8 | EMI | 55 | 45 | 0 | 14 | distilled water | 266 |
| Example 9 | EMI | 80 | 20 | 0 | 14 | distilled water | 267 |
| Example 10 | EMI | 80 | 20 | 0 | 14 | distilled water | 267 |
| Example 11 | CHMI | 63 | 37 | 0 | 14 | distilled water | 267 |
| Example 12 | tBMI | 60 | 40 | 0 | 14 | distilled water | 266 |

EMI: N-ethylmaleimide, CHMI: N-cyclohexylmaleimide, tBMI: N-tert-butylmaleimide, St: styrene, MMA: methyl methacrylate, PVP: polyvinyl pyrrolidone, HPMC: hydroxypropylmethylcellulose, NaPAA: sodium polyacrylate, PEG: polyethylene glycol, PBO: tert-butylperoxy-2-ethylhexanoate, PBP: tert-butylperoxypivalate, RMI: N-alkylmaleimide

| Example | Preparation | | | | | Production condition | |
|---|---|---|---|---|---|---|---|
| | Dispersing agent | | | Initiator | | Polymerization temperature | Polymerization time |
| No. | | K value | (part by weight) | | (part by weight) | (°C) | (hour) |
| Example 1 | PVP | 30 | 0.7 | PBO | 0.08 | 70 | 2.0 |
| Comparative Example 1 | HPMC | - | 0.7 | PBO | 0.08 | 70 | 2.0 |
| Example 2 | PVP | 30 | 0.7 | PBO | 0.08 | 70 | 2.3 |
| Comparative Example 2 | none | - | 0.0 | none | 0.00 | 70 | 24.0 |
| Comparative Example 3 | none | - | 0.0 | PBP | 0.21 | 50 | 10.0 |
| Example 3 | PVP | 30 | 0.7 | PBO | 0.08 | 70 | 5.0 |
| Example 4 | ↑ | 30 | 13.1 | PBO | 0.08 | 70 | 2.3 |
| Example 5 | ↑ | 90 | 2.3 | PBO | 0.08 | 70 | 2.3 |
| Example 6 | ↑ | 90 | 2.4 | PBO | 0.08 | 70 | 5.0 |
| Example 7 | ↑ | 90 | 2.4 | PBO | 0.08 | 70 | 5.0 |
| Example 8 | ↑ | 90 | 2.4 | PBO | 0.08 | 70 | 5.0 |
| Example 9 | ↑ | 90 | 0.7 | PBO | 0.08 | 70 | 2.3 |
| Example 10 | ↑ | 90 | 0.3 | PBO | 0.08 | 70 | 2.3 |
| Example 11 | ↑ | 90 | 2.4 | PBO | 0.07 | 70 | 5.0 |
| Example 12 | ↑ | 90 | 2.4 | PBO | 0.07 | 70 | 5.0 |

EMI: N-ethylmaleimide, CHMI: N-cyclohexylmaleimide, tBMI: N-tert-butylmaleimide, St: styrene, MMA: methyl methacrylate, PVP: polyvinyl pyrrolidone, HPMC: hydroxypropylmethylcellulose, NaPAA: sodium polyacrylate, PEG: polyethylene glycol, PBO: tert-butylperoxy-2-ethylhexanoate, PBP: tert-butylperoxypivalate, RMI: N-alkylmaleimide

| Example | Preparation | | | | | | |
|---|---|---|---|---|---|---|---|
| | Monomer | | | | Toluene | Aqueous medium | |
| | | RMI | St | MMA | | | |
| No. | | (part by weight) | (part by weight) | (part by weight) | (part by weight) | | (part by weight) |
| Example 13 | EMI | 80 | 20 | 0 | 14 | distilled water | 267 |
| Example 14 | EMI | 78 | 22 | 0 | 11 | distilled water | 260 |
| Example 15 | EMI | 80 | 20 | 0 | 14 | distilled water | 266 |
| Example 16 | EMI | 77 | 23 | 0 | 11 | distilled water | 260 |
| Example 17 | EMI | 77 | 23 | 0 | 11 | distilled water | 260 |
| Example 18 | EMI | 67 | 15 | 18 | 0 | distilled water | 233 |
| Example 19 | EMI | 65 | 16 | 19 | 0 | distilled water | 233 |
| Comparative Example 4 | EMI | 67 | 15 | 18 | 0 | distilled water | 233 |
| Comparative Example 5 | EMI | 63 | 17 | 20 | 0 | none | 0 |
| Comparative Example 6 | - | - | - | - | - | none | - |
| Example 20 | EMI | 76 | 24 | 0 | 14 | 20% aqueous sodium chloride solution | 267 |
| Example 21 | EMI | 77 | 23 | 0 | 11 | 5% aqueous sodium chloride solution | 259 |
| Example 22 | EMI | 77 | 23 | 0 | 11 | 2% aqueous sodium sulfate solution | 259 |
| Comparative Example 7 | EMI | 77 | 23 | 0 | 0 | none | 0 |
| Example 23 | EMI | 76 | 24 | 0 | 14 | distilled water | 267 |
| Example 24 | EMI | 77 | 23 | 0 | 11 | distilled water | 260 |

EMI: N-ethylmaleimide, CHMI: N-cyclohexylmaleimide, tBMI: N-tert-butylmaleimide, St: styrene, MMA: methyl methacrylate, PVP: polyvinyl pyrrolidone, HPMC: hydroxypropylmethylcellulose, NaPAA: sodium polyacrylate, PEG: polyethylene glycol, PBO: tert-butylperoxy-2-ethylhexanoate, PBP: tert-butylperoxypivalate, RMI: N-alkylmaleimide

| Example | Preparation | | | | | Production condition | |
|---|---|---|---|---|---|---|---|
| | Dispersing agent | | | Initiator | | Polymerization temperature | Polymerization time |
| No. | | K value | (part by weight) | | (part by weight) | (°C) | (hour) |
| Example 13 | ↑ | 120 | 0.7 | PBO | 0.13 | 70 | 3.0 |
| Example 14 | ↑ | 120 | 0.2 | PBO | 0.13 | 70 | 3.0 |
| Example 15 | NaPAA | - | 0.2 | PBO | 0.12 | 70 | 3.0 |
| Example 16 | PEG | - | 0.06 | PBO | 0.12 | 70 | 3.0 |
| Example 17 | ↑ | - | 0.02 | PBO | 0.12 | 70 | 3.0 |
| Example 18 | PVP | 30 | 0.6 | PBO | 0.12 | 70 | 2.0 |
| Example 19 | PEG | - | 0.02 | PBO | 0.13 | 70 | 7.0 |
| Comparative Example 4 | HPMC | - | 0.6 | PBO | 0.08 | 70 | 2.0 |
| Comparative Example 5 | none | - | 0.0 | none | 0.00 | 70 | 24.0 |
| Comparative Example 6 | - | - | - | - | - | - | - |
| Example 20 | PVP | 30 | 0.7 | PBO | 0.08 | 70 | 5.0 |
| Example 21 | PEG | - | 0.06 | PBO | 0.12 | 70 | 3.0 |
| Example 22 | PEG | - | 0.06 | PBO | 0.12 | 70 | 3.0 |
| Comparative Example 7 | none | - | 0.0 | none | 0.00 | 70 | 24.0 |
| Example 23 | PVP | 30 | 0.7 | PBO | 0.08 | 70 | 5.0 |
| Example 24 | PEG | - | 0.06 | PBO | 0.12 | 70 | 3.0 |

EMI: N-ethylmaleimide, CHMI: N-cyclohexylmaleimide, tBMI: N-tert-butylmaleimide, St: styrene, MMA: methyl methacrylate, PVP: polyvinyl pyrrolidone, HPMC: hydroxypropylmethylcellulose, NaPAA: sodium polyacrylate, PEG: polyethylene glycol, PBO: tert-butylperoxy-2-ethylhexanoate, PBP: tert-butylperoxypivalate, RMI: N-alkylmaleimide

[Table 2]

| Example | Production result | | | | | Resin composition |
|---|---|---|---|---|---|---|
| | Yield | Average particle diameter | RMI unit | Mw | Mw/Mn | Dispersing agent content |
| No. | (%) | (μm) | (weight%) | ($\times 10^4$) | | (part by weight) |
| Example 1 | 57 | 2,000 | 65 | 93 | 2.6 | 0.18 |
| Comparative Example 1 | 52 | 103 | 67 | 93 | 2.8 | - |
| Example 2 | 60 | 2,000 | 68 | 94 | 2.5 | 0.18 |
| Comparative Example 2 | 63 | - | 67 | 106 | 2.4 | 0.00 |
| Comparative Example 3 | 89 | - | 67 | 37 | 7.9 | 0.00 |
| Example 3 | 62 | - | 71 | 87 | 3.2 | 0.18 |
| Example 4 | 55 | 490 | 67 | 94 | 2.9 | 1.19 |
| Example 5 | 58 | 359 | 69 | 89 | 3.4 | 1.34 |
| Example 6 | 64 | 374 | 72 | 85 | 4.3 | 1.34 |
| Example 7 | 72 | 358 | 68 | 98 | 4.3 | 1.34 |
| Example 8 | 90 | 360 | 55 | 105 | 2.3 | 1.34 |
| Example 9 | 57 | 335 | 68 | 91 | 3.2 | 0.95 |
| Example 10 | 59 | 429 | 68 | 90 | 2.8 | 0.79 |
| Example 11 | 90 | 360 | 63 | 102 | 2.2 | 1.34 |
| Example 12 | 90 | 355 | 60 | 105 | 2.3 | 1.34 |
| Example 13 | 62 | 297 | 70 | 99 | 3.4 | 1.28 |
| Example 14 | 62 | 302 | 69 | 103 | 3.4 | 0.42 |
| Example 15 | 64 | 2,000 | 72 | 90 | 4.0 | 0.05 |
| Example 16 | 66 | 441 | 68 | 109 | 3.0 | 0.02 |
| Example 17 | 68 | 934 | 67 | 104 | 3.2 | 0.01 |
| Example 18 | 65 | 1,016 | 55 | 124 | 2.2 | 0.18 |
| Example 19 | 70 | 882 | 51 | 35 | 2.3 | 0.01 |
| Comparative Example 4 | 57 | 426 | 53 | 137 | 2.1 | - |
| Comparative Example 5 | 79 | - | 56 | 128 | 2.8 | 0.00 |
| Comparative Example 6 | - | - | - | - | - | 3.36 |
| Example 20 | 75 | 2,000 | 67 | 94 | 3.1 | - |
| Example 21 | 69 | 500 | 69 | 100 | 3.1 | - |
| Example 22 | 68 | 500 | 70 | 101 | 3.1 | - |
| Comparative Example 7 | 80 | - | 67 | 106 | 2.4 | - |
| Example 23 | 61 | 2,000 | 63 | 101 | 3.0 | - |
| Example 24 | 66 | 500 | 68 | 109 | 3.0 | - |

RMI: N-alkylmaleimide

[Table 3]

| Example<br>No. | Solubility in chloroform | Film physical property | |
|---|---|---|---|
| | | Film thickness (μm) | Heat resistance Tg (°C) |
| Example 1 | no insoluble part | 47 | - |
| Comparative Example 1 | insoluble part present | 52 | - |
| Example 2 | no insoluble part | 57 | 190 |
| Comparative Example 2 | no insoluble part | 50 | 194 |
| Comparative Example 3 | no insoluble part | 50 | 191 |
| Example 3 | no insoluble part | - | - |
| Example 4 | no insoluble part | 52 | - |
| Example 5 | no insoluble part | - | - |
| Example 6 | no insoluble part | - | - |
| Example 7 | no insoluble part | 55 | - |
| Example 8 | no insoluble part | 50 | 183 |
| Example 9 | no insoluble part | 53 | - |
| Example 10 | no insoluble part | 52 | - |
| Example 11 | no insoluble part | 50 | 212 |
| Example 12 | no insoluble part | 50 | 185 |
| Example 13 | no insoluble part | 50 | - |
| Example 14 | no insoluble part | 50 | - |
| Example 15 | no insoluble part | 52 | - |
| Example 16 | no insoluble part | 52 | 191 |
| Example 17 | no insoluble part | 51 | 192 |
| Example 18 | no insoluble part | 50 | - |
| Example 19 | no insoluble part | 52 | - |
| Comparative Example 4 | insoluble part present | - | - |
| Comparative Example 5 | no insoluble part | 52 | 167 |
| Comparative Example 6 | no insoluble part | 55 | - |

*: Unmeasurable due to brittleness of formed film.

| Example | Film physical property | | | | | |
|---|---|---|---|---|---|---|
| | Mechanical strength | | Optical characteristic | | | |
| No. | Tensile stress (MPa) | Tensile elongation (%) | Haze (%) | C ($\times 10^{-12} Pa^{-1}$) | $\Delta n^0$ ($\times 10^{-3}$) | $d\Delta n^0/dT$ ($\times 10^{-5} °C^{-1}$) |
| Example 1 | - | - | 1.42 | - | - | - |
| Comparative Example 1 | 28 | 1.4 | 3.40 | - | - | - |
| Example 2 | 52 | 3.3 | 0.56 | 0.63 | -4.89 | 0.92 |
| Comparative Example 2 | 51 | 3.0 | 0.15 | 0.91 | 0.08 | 0.79 |
| Comparative Example 3 | * | * | - | 1.13 | - | - |
| Example 3 | - | - | - | - | - | - |
| Example 4 | - | - | 1.02 | - | - | - |
| Example 5 | - | - | - | - | - | - |
| Example 6 | - | - | - | - | - | - |
| Example 7 | - | - | 1.80 | - | - | - |
| Example 8 | - | - | - | - | - | - |
| Example 9 | - | - | 1.54 | - | - | - |
| Example 10 | - | - | 1.01 | - | - | - |
| Example 11 | - | - | - | - | - | - |
| Example 12 | - | - | - | - | - | - |
| Example 13 | - | - | 1.08 | - | - | - |
| Example 14 | - | - | 0.42 | - | - | - |
| Example 15 | - | - | 1.17 | - | - | - |
| Example 16 | - | - | 0.26 | 0.45 | -4.04 | 1.53 |
| Example 17 | - | - | 0.25 | 0.44 | -3.79 | 1.58 |
| Example 18 | - | - | 0.63 | - | - | - |
| Example 19 | - | - | 0.26 | - | - | - |
| Comparative Example 4 | - | - | - | - | - | - |
| Comparative Example 5 | 56 | 3.0 | 0.26 | -0.24 | 0.10 | 1.21 |
| Comparative Example 6 | - | - | 3.16 | - | - | - |

*: Unmeasurable due to brittleness of formed film.

## Claims

1. A method for producing an N-alkylmaleimide-based polymer, comprising using an oil-soluble radical polymerization initiator to carry out suspension polymerization, in an aqueous medium in the presence of at least one dispersant

selected from the group consisting of a nonionic compound having no hydrogen bonded to oxygen or nitrogen, a polyacrylate salt, and a polyalkylene glycol, with respect to a monomer mixture consisting of 20% by weight to 100% by weight of N-alkylmaleimide represented by the following general formula (1) and 0% by weight to 80% by weight of other copolymerizable monomers:

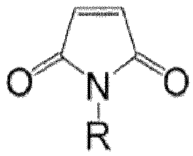 (1)

where R represents a linear alkyl group having 1 to 12 carbon atoms, a branched alkyl group having 3 to 12 carbon atoms, or a cyclic alkyl group having 3 to 6 carbon atoms.

**2.** The method as set forth in claim 1, wherein R is a methyl group, an ethyl group, a propyl group, an isopropyl group, a butyl group, an isobutyl group, a sec-butyl group, a tert-butyl group, a hexyl group, a cyclohexyl group, or an octyl group.

**3.** The method as set forth in claim 1 or 2, wherein the other copolymerizable monomers are vinyl aromatic hydrocarbons, olefins, acrylic acid alkyl esters, methacrylic acid alkyl esters, or carboxylic acid vinyl esters.

**4.** The method as set forth in claim 1 or 2, wherein the dispersant is at least one selected from the group consisting of polyvinyl pyrrolidone, sodium polyacrylate, and polyethylene glycol.

**5.** The method as set forth in claim 1 or 2, wherein the N-alkylmaleimide-based polymer has a weight average molecular weight of 200,000 to 2,000,000.

**6.** The method as set forth in claim 1 or 2, wherein the aqueous medium in which suspension polymerization is carried out contains a salt.

**7.** The method as set forth in claim 1 or 2, further comprising,

after the N-alkylmaleimide-based polymer obtained by suspension polymerization is filtered,
cleaning the N-alkylmaleimide-based polymer with a solvent for dissolving the dispersant without dissolving the N-alkylmaleimide-based polymer, and
cleaning the N-alkylmaleimide-based polymer with a solvent for dissolving an unreacted monomer without dissolving the N-alkylmaleimide-based polymer.

**8.** A resin composition comprising:

not more than 2 parts by weight of at least one dispersant selected from the group consisting of a nonionic compound having no hydrogen bonded to oxygen or nitrogen, a polyacrylate salt, and a polyalkylene glycol; and 100 parts by weight of an N-alkylmaleimide-based polymer consisting of 20% by weight to 100% by weight of N-alkylmaleimide residues represented by the following general formula (1A) and 0% by weight to 80% by weight of other copolymerizable monomer residues:

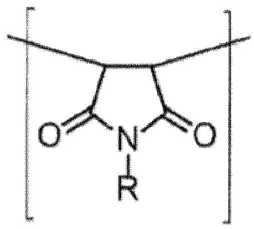 (1A)

where R represents a linear alkyl group having 1 to 12 carbon atoms, a branched alkyl group having 3 to 12 carbon atoms, or a cyclic alkyl group having 3 to 6 carbon atoms.

## INTERNATIONAL SEARCH REPORT

International application No.
**PCT/JP2022/047128**

**A. CLASSIFICATION OF SUBJECT MATTER**

***C08F 222/40***(2006.01)i; ***C08F 2/18***(2006.01)i; ***C08F 2/20***(2006.01)i; ***C08F 22/40***(2006.01)i; ***C08F 210/00***(2006.01)i; ***C08F 212/06***(2006.01)i; ***C08F 218/04***(2006.01)i; ***C08F 220/18***(2006.01)i; ***C08L 33/24***(2006.01)i; ***C08L 35/00***(2006.01)i
FI: C08F222/40; C08F212/06; C08F210/00; C08F220/18; C08F218/04; C08F2/20; C08F2/18; C08L33/24; C08L35/00; C08F22/40

According to International Patent Classification (IPC) or to both national classification and IPC

**B. FIELDS SEARCHED**

Minimum documentation searched (classification system followed by classification symbols)

C08F222/40; C08F2/18; C08F2/20; C08F22/40; C08F210/00; C08F212/06; C08F218/04; C08F220/18; C08L33/24; C08L35/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 1-102060 A (NIPPON OIL & FATS CO LTD) 19 April 1989 (1989-04-19) claims, p. 3, upper left column, line 1 from the bottom to lower right column, line 7 from the bottom, p. 4, upper left column, line 6 from the bottom to upper right column, line 7, examples | 1-3, 5, 6, 8 |
| Y | | 7 |
| A | | 4 |
| X | JP 62-177009 A (MITSUBISHI RAYON CO LTD) 03 August 1987 (1987-08-03) claims, p. 6, upper left column, lines 12-19, p. 7, upper right column, line 10 to lower left column, line 3, examples | 1-8 |
| Y | | 7 |
| X | JP 62-156115 A (MITSUBISHI RAYON CO LTD) 11 July 1987 (1987-07-11) claims, p. 5, upper right column, lines 8-15, p. 6, lower left column, lines 4-16, examples | 1-8 |
| Y | | 7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 February 2023** | **20 March 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/047128**

| Patent document cited in search report | | | Publication date (day/month/year) | Patent family member(s) | Publication date (day/month/year) |
|---|---|---|---|---|---|
| JP | 1-102060 | A | 19 April 1989 | (Family: none) | |
| JP | 62-177009 | A | 03 August 1987 | (Family: none) | |
| JP | 62-156115 | A | 11 July 1987 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020126229 A
- JP 2009102495 A
- JP 2009215346 A


### Non-patent literature cited in the description


- **OTSU TAKAYUKI.** *Future materials,* vol. 3 (1), 74-79
- **ASHIDA.** *Polymer,* 1958, vol. 7 (5), 298-302